# EUROPEAN PATENT SPECIFICATION

(11) **EP 4 653 125 B1**
(45) Date of publication and mention of the grant of the patent: **16.09.2026**
(21) Application number: 24382549.4
(22) Date of filing: 23.05.2024
(51) Int. Cl.: B23K 26/144, B23K 26/34, F16D 69/00

(54) **METHOD FOR MANUFACTURING A BRAKE DISK**
VERFAHREN ZUR HERSTELLUNG EINER BREMSSCHEIBE
PROCÉDÉ DE FABRICATION D'UN DISQUE DE FREIN

(43) Date of publication of application: 26.11.2025
(73) Proprietor: Talens Systems SLU, 20870 Guipúzcoa (ES)
(72) Inventor: GABILONDO, Jose Juan, 20870 ELGOIBAR (Guipúzcoa) (ES); ALVAREZ, Piera, 20870 ELGOIBAR (Guipúzcoa) (ES); AZPELETA GABILONDO, María, 20870 ELGOIBAR (Guipúzcoa) (ES)
(74) Representative: Balder IP Law, S.L.

(56) References cited:
- EP-A1- 4 295 984
- DE-A1- 102019 132 192
- DE-A1- 102023 102 044

## Description

### TECHNICAL FIELD

The present disclosure relates to the field of brake disks for friction brakes of vehicles, in particular motor vehicles, such as land motor vehicles. More specifically, the present disclosure relates to the manufacturing of such brake disks. The disclosure is particularly advantageous for manufacturing processes involving an energy beam, such as a laser energy beam.

### STATE OF THE ART

Friction brakes comprise a rotatable element, such as brake drum or a brake disk. A brake disk typically comprises two outer friction surfaces opposing each other. These surfaces are usually circular ring-shaped surfaces. During a braking operation, these surfaces are pressed against a brake pad so that the brake disk is braked.

Brake disks are usually made of a core part of a metallic material (base material), such as cast iron, which is a relatively low-cost material having several properties which make it suitable for the manufacturing of brake disks, such as high melting point, good heat storage capacity, good conductivity and good ability to be machined.

It is well-known to apply a wearing coat, being more resistant to wear and corrosion than the base material, to the base material of the brake disk (see document EP 4 295 984 A1). Such coat is usually also aimed at increasing the friction coefficient of the brake disk. Apart from these reasons inherently associated with the efficiency of the brake disk, there is currently a requirement of the market to produce brake disks which produce minimum fine dust emissions (the Euro 7 emission rules for motor vehicles). For all these reasons, the application of the wearing coat must be optimized so that both the efficiency of the brake disk in terms of resistance to wear and friction coefficient, and its low emission requirements, are achieved.

The coating can be a powder coating, meaning that a coating material, prior to being applied to the friction surfaces, is in the form of powder, in such a way that during the application of the coating, or shortly beforehand, the powder to be applied is melted by applying heat, and thus it combines with the base material of the brake disk, forming a surface layer on it. The powder can for example be applied to the friction surfaces using a laser cladding process. Examples of well-known materials used as coating are metals combined with carbides. The applied wearing coat must have good bonding capabilities to the base material of the brake disk.

However, it has been observed that the adherence between the wearing coat and the base material of the brake disk, particularly when the base material is cast iron, is usually poor due to the presence of graphite in the cast iron, in particular, in the form of lamellar graphite and/or spherical or quasi-spherical graphite flakes. For example, due to the high power of the laser beam applied in a laser cladding process used for coating a cast iron part with a metallic material provided in powder form, the graphite lamellae included in the cast iron, in particular in its upper surface, are evaporated, creating cracks, hollow areas and bubbles inside the coating being applied, thus adding defects that reduce the adhesion between the wear coat and the surface of the base material. Consequently, these defects cause different imperfections in the coating layer, such as voids or discontinuities in the coating layer and irregular (i.e. non-flat) coating surface. Therefore, to improve the reliability of the wear coating process, there is a need to reduce the amount of lamellar graphite in the surface of the base material of the brake disk.

Different techniques have been proposed to reduce the amount of graphite from the surface of the base material of a brake disk. For example, prior to applying such coating on the base material, the base material can be pretreated. US2013/0153345A1 mentions detaching and removing the graphite component from the friction surface by subjecting the brake element to an ultrasound treatment or by applying a laser beam treatment. US2014/0262642A1 mentions a method for producing a brake disk including, prior to applying a wearing coat, pretreating the contact surface of the base material of the brake disk. This pretreatment can include modifying the surface topography with laser irradiation, for example to remove organic deposits. DE102010048075A1 and DE102011056307A1 mention different techniques for forming a graphite-free friction surface layer, including by laser treatment.

However, all the cited references are silent about how such laser treatments must indeed be applied to eventually achieve the desired result.

Therefore, there is a need to improve current methods of manufacturing brake disks, so that a brake disk with improved adherence between a coating layer and the base material of the brake disk can be achieved, thus enhancing the reliability of the wear coating layer.

### DESCRIPTION OF THE INVENTION

The method for manufacturing a brake disk and the brake disk manufactured following the method described in the present disclosure intend to solve the shortcomings of prior art manufacturing processes of brake disks and obtainable brake disks.

It is an aim of the present disclosure to obtain a brake disk having increased efficiency, in particular having one or more friction surfaces with increased resistance to wear and corrosion and increased friction coefficient. The increased efficiency must be obtained without substantially compromising the homogeneity of the disk substrate beneath its uppermost (superficial) portion.

The brake disk of this disclosure is manufactured from a substrate, base material or basic body (from now on, the substrate) made of a graphite-containing metallic material. The substrate may, for example, be cast or forged from suitable materials, such as grey cast iron, cast steel, forged steel, spheroidal graphite cast iron, etc. The substrate is preferably made of grey cast iron. The metallic material of which the substrate is made contains graphite, often in the form of lamellae. This is typical, for example, but not limiting, of the grey cast iron. The substrate is a rotatable element having two substantially flat surfaces opposing each other. These surfaces are usually circular ring-shaped surfaces.

At least one coating layer is deposited onto a surface of the substrate intended to be a friction surface of the final brake disk once it has been completely manufactured. This process can be subsequently repeated with the opposite surface of the substrate. The coating layer aims at increasing the efficiency of the brake disk, such as increasing its resistance to wear and corrosion and its friction coefficient. The coating layer is applied using a laser cladding deposition process providing high power and high intake of material, in which powder is poured onto the surface to be coated, while a laser beam is radiated onto the surface to be coated from a laser head which is moved along the surface to be treated. The radiation of the laser beam focused on the surface generates a melt pool on the surface when powder is fed via, for example, a nozzle, in such a way that the powder melts. As the laser beam travels along the surface of the substrate, moving away from the deposited material, the deposited material cools down and solidifies on the surface of the substrate. By repeating this process all over the surface to be treated, a coating layer substantially covers the substrate. The covered surface can be a friction surface of a brake disk.

A first aspect of the disclosure relates to a method for manufacturing a brake disk, comprising:
providing a substrate of a brake disk, the substrate being made of a graphite-containing metallic material, the substrate defining a surface;
depositing a metal-based coating layer onto the surface of the substrate by applying a laser cladding deposition process in which powder is deposited onto the surface while a laser beam is radiated onto the surface, wherein the powder is delivered from a powder nozzle coupled to the laser head from which the laser beam is radiated, so that the powder being delivered and the laser beam move jointly over the surface to be coated as the laser head moves,
wherein the diameter of a laser spot applied on the surface by the laser beam is greater than the diameter of a powder spot deposited on the surface from the powder nozzle, and the axis of the laser spot applied on the surface is misaligned with respect to the axis of the powder spot delivered to the surface.

Therefore, due to the misalignment between axes (axis of the laser beam and therefore corresponding laser spot, on the one hand, and axis of the powder nozzle and therefore corresponding powder spot, on the other hand), some laser radiation applied on the surface by the laser beam reaches a zone of the surface of the substrate before powder delivered from the powder nozzle is deposited on that zone of the surface, in such a way that said some laser radiation interacts with said zone of the surface before powder is deposited on said zone, thermically preparing the surface to receive the powder and laser cleaning the surface. Besides, other laser radiation reaches the zone of the surface on which powder is being poured at the same time as said powder is deposited on the thermically prepared zone, thus enabling the melting of the deposited powder and the creation of a clad which integrates well with the thermically prepared surface of the substrate. By laser radiating the zone of the surface before powder is deposited on said zone, the zone is minimally altered due to the evaporation of graphite present in the uppermost thickness of the substrate, thus improving the contact surface on which material (deposited powder) will be received. This laser radiation also causes the evaporation of additional dirt, such as lubricant remains and rust, for example caused by a previous machining process, thus preventing the loss of quality of the deposited metal-based coating layer.

After repeating this process all over the surface of the substrate for a certain cycle time, a metal-based coating layer or clad substantially covers the substrate. The covered surface can be a friction surface of a brake disk.

In the context of the present disclosure, a laser spot (or area thereof) is understood to mean a projection on the surface of the substrate of a radiated laser beam, covering an area thereof. A powder spot is understood to mean the powder as deposited or projected on the surface of the substrate as delivered for example from a powder nozzle, covering an area thereof.

The substrate is preferably made of grey cast iron.

The graphite contained in the substrate is typically lamellar graphite, which is present in, among other types of substrate, grey cast iron.

The at least one coating layer comprises metal. In the context of the present disclosure, the at least one coating layer is a metal-based coating layer. In some embodiments, the at least one coating layer is a single layer made of metal. Preferably, the metal-based coating layer is made of steel, such as stainless steel. In some embodiments, the at least one coating layer is a single layer made of a mix of a metal and a carbide. In some embodiments, the at least one coating layer is a multilayer comprising two coating layers. In some embodiments, the at least one coating layer is a multilayer comprising at least one coating layer made of metal and at least one coating layer made of a mix of a metal and a carbide. Alternatively, the at least one coating layer is a multilayer comprising at least two coating layers made of a mix of a metal and a carbide. The at least one coating layer made of metal of the multilayer is preferably made of steel, such as stainless steel. The metal in the at least one coating layer made of a mix of a metal and a carbide is preferably steel, such as stainless steel. In preferred embodiments, the carbide is tungsten carbide or titanium carbide. In some embodiments, the at least one coating layer made of metal comprises only pure metal.

In some embodiments, the at least one coating layer made of a mix of a metal and a carbide comprises from about 10 wt.% to about 30 wt.% of a carbide and from about 70 wt.% and 90 wt.% of a metal. In some embodiments, the at least one coating layer made of a mix of a metal and a carbide comprises from about 20 vol.% to about 40 vol.% of a carbide and from about 60 vol.% to about 80 vol.% of a metal.

In some embodiments, the at least one coating layer is a single layer having thickness from about 50 to about 250 µm. For example, the single layer may have a thickness of about 100 µm with a tolerance of ±40 µm or a thickness of about 200 µm with a tolerance of ±40 µm. In some embodiments, the at least one coating layer is a multilayer made of two layers, wherein the first layer may have thickness between 50 and 250 µm and the second layer may have thickness between 150 and 350 µm. For example, the first layer may have a thickness of about 100 µm with a tolerance of ±40 µm or a thickness of about 200 µm with a tolerance of ±40 µm. For example, the second layer may have a thickness of about 200 µm with a tolerance of ±20 µm or a thickness of about 300 µm with a tolerance of ±20 µm. The thickness of the one or more layers was determined by acquiring and evaluating scanning electron microscope (SEM) and/or optical microscope (OM) images.

The powder used to obtain the at least one coating layer may be metal-based powder, such as steel-based powder, or a mix of metal-based powder and carbide-based powder. Non-limiting examples of carbide-based powder are tungsten carbide powder and titanium carbide powder. The metal-based powder is conventional and is out of the scope of the present invention. For example, powder may be a particle composite made of steel. Or powder may be a particle composite made of carbide. When a coating layer made of a mix of a metal and a carbide is to be obtained, powder particles of metal and powder particles of carbide are combined and the mix of powder particles is poured onto the surface to be coated, in such a way that, when a laser beam is radiated onto the surface to be coated, the radiation of the laser beam focused on the surface generates a melt pool of material on the surface. The size of the powder particles may vary in the range from about 4 to about 180 µm (microns, 10⁻⁶ m) of diameter (assuming spherical particles, although they may also take other forms, including irregular, in which case the former values refer to the largest dimension of the particle). Preferably, the size of the powder particles may vary from about 10 to about 63 µm, more preferably from about 20 to about 53 µm. Powder particles are typically commercialized under specific fractions of diameter or main dimension, such as between 5-45 µm, or between 4-45 µm, or between 15-45 µm, or between 20-53 µm, or between 20-63 µm, or between 45-106 µm, or between 45-150 µm, or between 53-125 µm, or between 53-180 µm. The shape and average size distributions of the particles were determined by acquiring and evaluating scanning electron microscope (SEM) and/or optical microscope (OM) images. In embodiments in which the particles are substantially spherical, the average size refers to the average diameter of the particles. In a non-limiting example, the metal-based powder used is a commercial powder, such as AISI 316L (stainless steel; spherical powder particles having diameter in the range of 20-53 µm, provided by Höganäs); or such as AISI 430L (stainless steel; spherical or irregular powder particles having main dimension in the range of 20-53 µm, provided by Höganäs); or such as WC (tungsten carbide; spherical powder particles having diameter in the range of 20-53 µm, provided by C&M); or such as TiC (titanium carbide; irregular powder particles having main dimension in the range of 15-45 µm, provided by Höganäs or in the range of 45-150 µm, provided by Ampere or in the range of 20-63 µm, provided by Heeger). In some embodiments, the titanium carbide can contain ferrochrome.

In some embodiments, the stage of depositing a coating layer involves depositing one single layer, preferably of a mix of metal and a carbide, such as tungsten carbide or titanium carbide. This layer is obtained from powder comprising a mix of metal-based powder and carbide-based powder.

The laser radiation applied in the laser cladding deposition stage is emitted from a laser processing head, which for example carries a nozzle. The emitted laser radiation passes through the nozzle, coaxially, along the longitudinal axis of the nozzle. For the laser beam to radiate onto the surface of the substrate, the laser beam preferably travels defining any pattern on the surface of the substrate to be exposed to the laser radiation. The laser system can be a pulsed laser or a continuous-wave laser, such as a scanned continuous-wave laser. Preferably, it is a continuous-wave laser. Preferably, the selected pattern follows a linear trajectory along a radial axis of the surface of the substrate. Preferably, simultaneously, the substrate revolves (spins) around its axis of rotation with a certain angular velocity. When the laser beam moves following a linear trajectory, the linear advance of the laser beam along the linear trajectory (i.e. from a central point of the surface, which for example corresponds to the inner radius of the substrate forming the brake disk, and therefore lies in the axis of rotation of the substrate, to a point of the substrate surface corresponding to its outer radius, or vice versa), generates a spiral-shaped trajectory. In other words, the substrate of the brake disk rotates while the laser processing head moves linearly on the surface of the substrate (following a defined pattern), said linear movement following a radial trajectory on the surface of the substrate.

Thus, in some embodiments the substrate of the brake disk rotates while the laser processing head from which the laser beam is emitted moves linearly on the surface of the substrate, said linear movement following a radial trajectory on the surface of the substrate. For example, the substrate rotates at a variable angular velocity while the laser beam linearly moves radially. The angular velocity of the substrate is variable to compensate for the radial advance of the laser beam, in such a way that the substrate rotates at a constant linear velocity. For example, the substrate may rotate at a linear velocity comprised in the range of between 80 and 240 meters/minute (m/min), preferably between 120 and 200 m/min. The laser beam preferably moves linearly at a velocity lower than 500 mm/min. The velocity of the laser beam depends on the dimensions of the brake disk. The velocity of the laser beam moving along the radius of the substrate can be adjusted to in turn adjust the distance between neighbour metal-based clads.

The powder is delivered from a powder nozzle coupled to the laser head from which the laser beam is radiated, so that the laser beam and the powder nozzle move together radially along the surface to be coated as the laser head moves and the powder is delivered simultaneously. A laser system providing a circular laser spot is used. Thus, the powder being delivered and the laser beam move jointly along the surface to be coated as the laser head moves. Preferably, the distance between the surface of the substrate and the proximal end of the nozzle from which the powder is to be delivered towards the surface, and the distance between the surface of the substrate and the focal distance of the laser beam, are selected so that a previously defined size (i.e. width or diameter) of the clad (deposited coating) is obtained. This previously defined size is usually smaller than the size (i.e. diameter) of the powder nozzle from which powder is delivered.

Unlike in conventional laser cladding deposition processes, in which the axis of the radiated laser beam (and therefore the axis of the corresponding laser spot projected on the surface being treated) is aligned with the axis of the nozzle or deposit from which the powder is delivered (and therefore the axis of the delivered powder spot), the inventors have surprisingly found that the cladding process is optimized when a portion of the laser spot reaches an area on the surface being treated a certain amount of time before the powder is deposited on that area of the surface in the form of metal-based clad. By laser radiating the area or zone of the surface before powder is deposited on that area or zone, graphite present in the uppermost thickness of the substrate is evaporated, altering a little bit the surface on which the powder will be poured soon afterwards, thus improving the contact surface on which material (deposited powder) will be received. This laser radiation also causes the evaporation of additional dirt that may be present on the surface, thus preventing the loss of quality of the deposited metal-based coating layer. It has therefore been observed that it is desirable that a portion of the laser spot interacts with the substrate without material being yet deposited during a certain amount of interaction time. To achieve this interaction time, certain misalignment between the axis of the laser beam (and therefore laser spot) and the axis of the powder spot is required. Therefore, the axis of the laser beam should be misaligned with respect to the axis of the nozzle delivering the powder. By decentering or misaligning the axis of the powder spot with respect to the axis of the laser beam, during the linear movement of the laser beam while the substrate of the brake disk rotates, a portion of the laser spot reaches an area on the surface being treated in advance to the instant in which the powder is in fact deposited on the surface in the form of metal-based clad. The decentering is such that the laser spot interacts with the substrate without material being yet deposited during the mentioned interaction time. The interaction time depends on the misalignment between axes, on the size of the laser spot and powder diameter, and on the process velocity.

The axis of the powder spot is preferably misaligned with respect to the axis of the laser spot in an amount between 0 and 20% of the diameter of the laser spot (0 not included), preferably between 2.5 and 20% thereof, more preferably between 2.5 and 15% thereof, still more preferably between 5 and 12.5% thereof. Thus, for example, when the difference between the diameter of the laser spot and the diameter of the powder spot is between 0.3 and 0.5 mm, the interaction time can be selected to be between 0.05 and 0.7ms, depending on the disk size and velocity.

By laser radiating the area on which the powder will be immediately afterwards deposited, the surface is thermally affected when the coating material is received. In other words, decentering the axis of the laser beam with respect to the axis of the powder spot provides thermal contribution to the substrate, which causes improving the contact surface of the substrate, in turn enabling better bonding between the melt pool (powder melted on the surface) and the surface of the substrate. It has been observed that conventional laser cladding processes in which the axis of the laser beam is aligned with the axis of the powder spot, providing simultaneous delivery of laser radiation and powder, result in undesired displacement of the deposited material on the surface of the substrate due to the stress suffered by the material when it is deposited on the substrate. This undesired displacement of material is more remarkable when a subsequent material clad (in the form of a cord or the like) is deposited next to a previously deposited clad. The proximity of a new deposited clad, which sometimes slightly overlaps a neighbour clad, together with the laser radiation applied during the deposition of the subsequent clad, removes the previously deposited clad, altering its position or displacing it from its location. This is possibly caused because there is no actual dilution of the substrate with the deposited material (such dilution is undesirable since it might damage the structure of the substrate). This hinders the integration and adherence of the material with the substrate. In contrast, with the misalignment of the present disclosure, the igneous powder particles reaching the surface with a certain delay with respect to the first application of laser radiation, can more easily fuse with the contact surface of the substrate, increasing their adherence to the substrate. By misaligning the two axes, some laser radiation is applied a bit in advance with respect to the application of powder material and the high concentration of laser energy is firstly only applied on the surface of the substrate, which becomes a bit thermally affected, which contributes to the subsequent integration of the igneous poured material and the substrate. The subsequent delivery of powder on the thermically prepared zone of the surface is simultaneous to the application of laser radiation thereon. Besides, by thermally preparing the surface of the substrate by laser radiation prior to applying the powder, some evaporation of lamellar graphite that may be present in the most superficial thickness of the substrate is caused prior to the actual delivery and melting of powder. This causes that the coating material is received on a surface which has some holes left by the evaporation of graphite and which has already been heated a little bit in advance. In sum, decentering the axis of the powder spot with respect to the axis of the laser beam spot contributes to the integration of the metal deposition with the substrate and to the adherence of the metal-based coating on the substrate.

Decentralizing the axis of the powder nozzle with respect to the axis of the laser beam can be achieved either by maintaining the powder nozzle (and therefore its cone) fixed and displacing the laser head accordingly, or the other way round, that is to say, maintaining the laser head in its original position and displacing the powder nozzle.

In the laser cladding deposition process, in some embodiments, the diameter of the laser spot is between 10 and 40% larger than the diameter of the powder spot. Using a diameter of the laser spot larger than the diameter of the powder spot enhances the advantages of the misalignment between axes, since it increases the interaction time in which a portion of the laser spot interacts with the substrate without material being yet deposited.

For example, using an area of laser spot larger than the area of the powder spot, together with the misalignment between the axis of the laser spot and the axis of the powder spot, contributes to the thermic conditioning of the surface on which the powder will subsequently be applied, thus enabling to heat this area just prior to the powder being indeed deposited. This also provides cleaning of the surface because the laser interaction with the zone of the substrate on which the powder will be applied just afterwards, causes evaporation of graphite lamellae present in the upper portion of the substrate (i.e. its surface and most superficial thickness of the substrate, of about 80 µm).

In some embodiments, during the laser deposition stage, a shielding gas is emitted onto the surface of the substrate where the laser beam is being applied but the powder has not yet been deposited. Thus, this shielding gas acts on the area being thermally treated by the laser beam immediately before the deposition of powder material. The shielding gas can be, for example, Nitrogen or Argon. The inventors have observed that the application of a shielding gas on a portion of the substrate on which laser radiation is being applied but powder has not yet been deposited contributes to preventing the oxidation of the surface being treated and contributes to the homogenization of the surface. Without the shielding gas, the gas emitted during the evaporation of graphite (evaporation which occurs because of the applied laser radiation) tends to oxide the surface of the substrate. The application of a shielding gas reduces the oxidation of the surface caused by this explosion or evaporation of graphite.

Prior to applying a laser cladding deposition process to deposit a metal-based coating layer on a surface of the substrate, a laser cleaning stage, in which no coating powder is delivered, is applied to the surface of the substrate. Thus, graphite is removed from the substrate, in particular, from the surface thereon on which the coating layer will later be deposited, by applying a cleaning stage in which the surface is radiated with a laser beam. More generally, graphite is removed from the surface of the substrate and from the portion of the substrate below said surface, in the vicinity thereof. This cleaning stage is applied prior to the laser cladding stage in which a coating layer is applied on the surface of the substrate. In particular, graphite is preferably removed from the most superficial portion of the substrate, typically from a superficial portion thereof having a maximum thickness of 80 µm, such as a maximum thickness of 50 µm or a maximum thickness of 30 µm. By removing graphite substantially only in this superficial portion, the substrate beneath this superficial portion is not damaged because its structure containing graphite is maintained. The graphite is usually in the form of lamellar graphite, which is typically present when the substrate is grey cast iron. Graphite is removed by radiating the surface with a laser beam under specific conditions. Together with the removal of graphite, lubricant remains and rust usually present on the surface of the substrate are also removed.

Like in the laser deposition process, in the laser cleaning process the substrate of the brake disk preferably rotates while the laser processing head moves linearly on the surface of the substrate, said linear movement following a radial trajectory on the surface of the substrate. Same or similar operational parameters as in the laser cladding deposition process may be used in the laser cleaning process.

Both in the laser cladding deposition stage and, in the event there is one, in the cleaning stage, the amount of density of energy to be applied on the surface of the substrate depends on several parameters, such as the power of the laser beam, the area of the laser spot to be applied on the surface and the required cycle time (amount of time within which the cleaning or deposition process of the surface must be accomplished). The density of energy applied by a laser beam follows the equation: $Density of energy = \frac{Energy}{area of laser spot} = \frac{power x cycle time}{area of laser spot}$ . In the laser cladding deposition stage, the density of energy must be applied in an amount that enables the thermal treatment of the surface on which powder is to be deposited and the melting of the powder to deposit a coating layer. In the cleaning stage, the density of energy must be applied in an amount that enables the removal of lamellar graphite from the surface of the substrate while substantially preserving the integrity of the substrate beneath the surface.

In embodiments of this disclosure, the power of the laser beam applied in the laser cladding deposition process is in a range between 6 and 16 kiloWatt (kW) both included, preferably between 7 and 12 kW both included, and more preferably between 7.5 and 10 kW both included. This power has proven to perform correctly if suitable diameters of laser spot and suitable values of cycle time are selected.

In some embodiments, the diameter of the laser spot used in the laser cladding process is in a range between 1.5 and 4 mm, preferably between 2 and 4 mm, more preferably between 2.2 and 3.7 mm, and still more preferably between 2.5 and 3.5 mm. The diameter of the powder spot is in a range between 1 and 3.5 mm, preferably between 1 and 2.5 mm, and more preferably between 1 and 2 mm.

The cycle time can be adjusted or selected taking into account several parameters, such as the size of the brake disk (surface to be cleaned) and the rotation velocity of the disk. The selected cycle time depends on the circumstances and specific application. A specific value of cycle time, or a maximum value of cycle time, is often imposed. For example, depending on the size of the brake disk to be treated, the cycle time may be required to be below 120 s (seconds), such as below 80 s, below 55 s (seconds), below 30 s or even below 20 s. Therefore, given a required cycle time, suitable values of the emitted power of the laser beam and diameter of the laser spot must be selected so that a brake disk having a friction surface with increased performance is obtained. In general, for a given area of laser spot, higher values of power of the laser beam enable to reduce the cycle time.

In some embodiments, the cycle time of the laser cladding deposition stage is selected to be comprised in the range of between 20 and 55 seconds. Within this range the coating layer applied on the substrate integrates well with the surface of the substrate when the power of the applied laser beam is in the range between 6 and 16 kW.

The cycle time can be imposed by production requirements. In this case, the cycle time is preferably as low as possible, so that a largest number of brake disks is manufactured per time unit (for example, working day). To optimize the production of accomplished brake disks, when a laser cleaning stage to remove graphite is applied prior to the laser cladding stage, the cycle time of the laser cleaning stage is preferably selected to be the same as the cycle time of the stage of applying a laser cladding deposition process to deposit a metal-based coating layer onto the surface of the substrate from which graphite has been previously removed. This enables to synchronize the operation of different production cells for the different production stages.

In embodiments of the disclosure, in the laser cladding deposition process the wavelength of the laser system used to radiate the surface of the substrate is preferably comprised in the range of between 800 and 1200 nanometer (nm, 10⁻⁹ m), such as between 1000 and 1150 nm, or between 1030 and 1100 nm. Other wavelengths also suitable to achieve graphite evaporation may be used alternatively.

In the laser cladding deposition process of a metal-based coating, the surface is preferably radiated with a laser beam emitting with a power comprised in the range of between 6 and 16 kW with a diameter of the laser spot comprised in the range of between 1.5 and 4 mm during a suitably selected cycle time, such as between 20 and 55 seconds. As indicated, to optimize the production of accomplished brake disks, when a laser cleaning stage is applied prior to the laser cladding process, the cycle time of the laser cleaning stage is preferably selected to be the same as the cycle time of the stage to deposit a metal-based coating layer onto the surface of the substrate from which graphite has been previously removed.

In some embodiments of the laser cladding deposition process to deposit a first coating layer, the laser beam provides a density of energy on the surface of the substrate in the range of between 14 kJ/mm² and 50 kJ/mm².

The inventors have observed that the thermal preparation of the surface due to the mentioned misalignment of axes during the laser cladding deposition process, which in fact occurs just before the actual deposition of material, conditions or prepares the surface in a way that improves the adherence of the subsequently deposited powder. This conditioning of the surface on which a coating is going to be deposited is particularly improved when a laser cleaning process to remove graphite has been previously applied (as a separate stage) on the surface of the substrate because the laser beam applied in the laser deposition process contributes to the elimination of additional lamellar graphite, for example present deeper in the substrate with respect to the most superficial thickness thereof. For example, a laser cleaning stage can result in evaporation of between about 50 and 100% of the graphite within the uppermost 30 µm of thickness of the substrate, and an additional laser cleaning stage performed during the material deposition process can cause the evaporation of graphite in a deeper region of the substrate, such as between 30 and 50 µm of depth. Without this additional laser heating/conditioning process performed just before the coating material is deposited (due to the axes misalignment), the graphite still present in the surface of the substrate can explode during the deposition of the material due to the high temperature reached by the molten pool and because the hollows or "bubbles" left open by the explosion of graphite cannot be filled in with deposited material due to the instantaneous cooling and solidification of the molten pool. This is prevented or at least reduced by the additional laser conditioning/cleaning process.

In embodiments, the stage of depositing a coating layer involves depositing one single layer. The layer can be made of a mix of a metal and a carbide, wherein the metal is preferably steel and the carbide is preferably tungsten carbide or titanium carbide.

For example, if the power of the laser beam is fixed to 6 kW and the cycle time is fixed to be 30 s, by selecting a diameter of laser spot between 2.4 and 3.3 mm, a suitable layer of metal-based coating is achieved. In this case, the applied density of energy on the surface of the substrate is between 21 and 40 kJ/mm². Or, if the power of the laser beam is fixed to 6 kW and the cycle time is fixed to be 50 s, by selecting a diameter of laser spot between 3 and 4 mm, a suitable layer of metal-based coating is achieved. In this case, the applied density of energy on the surface of the substrate is between 21 and 42 kJ/mm². Or, if the power of the laser beam is fixed to 6 kW and the cycle time is fixed to be 70 s, by selecting a diameter of laser spot between 3.5 and 4 mm, a suitable layer of metal-based coating is achieved. In this case, the applied density of energy on the surface of the substrate is between 32 and 44 kJ/mm². At this power, large diameters of laser spot, such as between 3.5 and 4 mm are less preferred because they require diameters of powder spot (which should be only a bit smaller than the diameter of the laser spot) relatively large, for which the applied power may not be enough to melt the powder completely even in long cycle times. Therefore, for an applied laser power of 6 kW, smaller areas of laser spot and therefore shorter cycle times are preferred.

For example, if the power of the laser beam is fixed to 7 kW and the cycle time is fixed to be 30 s, by selecting a diameter of laser spot between 2.5 and 3.3 mm, a suitable layer of metal-based coating is achieved. In this case, the applied density of energy on the surface of the substrate is between 21 and 42 kJ/mm². Or, if the power of the laser beam is fixed to 7 kW and the cycle time is fixed to be 50 s, by selecting a diameter of laser spot between 3.2 and 4 mm, a suitable layer of metal-based coating is achieved. In this case, the applied density of energy on the surface of the substrate is between 27 and 42 kJ/mm². Or, if the power of the laser beam is fixed to 7 kW and the cycle time is fixed to be 70 s, by selecting a diameter of laser spot between 3.8 and 4 mm, a suitable layer of metal-based coating is achieved. In this case, the applied density of energy on the surface of the substrate is between 38 and 43 kJ/mm². However, for the same reason as the one given for power of 6 kW, small areas of laser spot and therefore short cycle times are preferred.

For example, if the power of the laser beam is fixed to 8 kW and the cycle time is fixed to be 30 s, by selecting a diameter of laser spot between 2.7 and 3.7 mm, a suitable layer of metal-based coating is achieved. In this case, the applied density of energy on the surface of the substrate is between 22 and 42 kJ/mm². Or, if the power of the laser beam is fixed to 8 kW and the cycle time is fixed to be 50 s, by selecting a diameter of laser spot between 3.3 and 4 mm, a suitable layer of metal-based coating is achieved. In this case, the applied density of energy on the surface of the substrate is between 30 and 46 kJ/mm².

For example, if the power of the laser beam is fixed to 9 kW and the cycle time is fixed to be 30 s, by selecting a diameter of laser spot between 2.7 and 3.7 mm, a suitable layer of metal-based coating is achieved. In this case, the applied density of energy on the surface of the substrate is between 25 and 47 kJ/mm². Or, if the power of the laser beam is fixed to 9 kW and the cycle time is fixed to be 50 s, by selecting a diameter of laser spot between 3.5 and 4 mm, a suitable layer of metal-based coating is achieved. In this case, the applied density of energy on the surface of the substrate is between 35 and 46 kJ/mm².

For example, if the power of the laser beam is fixed to 12 kW and the cycle time is fixed to be 30 s, by selecting a diameter of laser spot between 3.2 and 4 mm, a suitable layer of metal-based coating is achieved. In this case, the applied density of energy on the surface of the substrate is between 28 and 45 kJ/mm². Or, if the power of the laser beam is fixed to 12 kW and the cycle time is fixed to be 19 s, by selecting a diameter of laser spot between 2.6 and 3.5 mm, a suitable layer of metal-based coating is achieved. In this case, the applied density of energy on the surface of the substrate is between 23 and 43 kJ/mm².

Considering a typical brake disc, when the mentioned parameters are applied (a laser beam emitting with power comprised in the range of between 6 and 16 kW, diameter of laser spot comprised in the range of between 1.5 and 4 mm, diameter of the powder spot is in a range between 1 and 3.5 mm, the substrate revolving at a linear velocity comprised in the range of 80 and 240 m/minute and the laser beam linearly moving at a velocity lower than 500 mm/minute), a circular ring-shaped surface of a substrate having an inner diameter of between 160 and 230 mm and an outer diameter of between 270 and 410 mm, requires a laser cladding deposition process to apply a coating layer having a duration comprised in the range of 20 seconds and 55 seconds.

When a laser cleaning stage is applied, it can use the same laser system as the laser system used in the cladding deposition process, or a different one.

In embodiments in which a laser cleaning stage is applied to remove graphite from the surface of the substrate on which a coating layer is going to be deposited following the disclosed laser cladding deposition process, the surface is radiated with a laser beam emitting with a power preferably comprised in the range of between about 2 and about 12 kW, more preferably between about 4 and about 8 kW, still more preferably between about 5 and about 7 kW. This power has proven to perform correctly if suitable diameters of laser spot and values of cycle time are selected.

In the cleaning stage, a laser system providing a circular laser spot is used. Preferred values of diameters of laser spot are comprised in the range between about 1.5 and about 4 mm. More preferred values of diameters of laser spot are between about 2 and about 4 mm, preferably between about 2.2 and about 3.7 mm, still more preferably between about 2.5 and about 3.5 mm. By selecting a suitable cycle time and power of the laser beam, graphite is correctly removed from the substrate.

In the cleaning stage, the cycle time is preferably selected to be comprised in the range of between about 20 and about 120 seconds, more preferably between about 20 and about 55 seconds. Suitable values of applied power of laser beam (preferably between about 2 and about 12 kW) and diameter of the laser spot (between about 1.5 and about 4 mm) must be selected so that graphite is correctly removed from the substrate.

In the cleaning stage, in some embodiments, the laser beam provides a density of energy on the surface of the substrate in the range of between 10 kJ/mm² and 45 kJ/mm², preferably between of between 14 kJ/mm² and 40 kJ/mm².

After the cleaning stage, the amount of graphite in the surface of the substrate is thus reduced. The absence of graphite due to evaporation during the cleaning stage leaves holes on the surface, these holes causing an increase of the contact surface of the substrate intended to receive the deposited material to build a metal-based coating layer in the subsequent laser deposition stage. These holes usually take the form of elongated branches, implying a prominent increase in the contact surface. The larger the contact surface of the substrate is, the more amount of deposited material will firmly take root by filling the holes made on the surface of the substrate. In particular, it has been observed that the contact surface of the substrate is increased in more than 20%, such as more than 30% or more than 50%, when the disclosed laser cleaning stage is applied. The inventors have observed that, when a metal-based coating layer is deposited onto the already cleaned substrate (i.e. the substrate having a reduced amount of graphite on its surface after radiating the surface with a laser beam as indicated above), that is to say, when a laser cleaning pretreatment is applied as a separate stage before the application of the laser cladding coating, the adherence of the coating layer(s) is increased (the coating layer is well integrated with the substrate), thus improving the resistance to wear and friction coefficient of the brake disk once manufactured. This is because holes left in the substrate (in the most superficial portion of the substrate) by the evaporation of graphite in the laser cleaning pretreatment are filled with the deposited coating material during the subsequent laser cladding process.

Besides, since the substrate previously treated with laser radiation has a reduced amount of lamellar graphite in its surface, the probability of evaporating graphite during the deposition process of the metal-based coating layer is reduced, and therefore it is less probable that undesired hollows and "bubbles" caused by abrupt graphite elimination (evaporation) are created during the deposition process. The contact surface between the substrate and the deposited coating layer is thus increased. It has also been observed that fine dust emissions typically emitted in use of the brake disk are also substantially reduced.

In the laser cleaning stage, the laser system must radiate at a wavelength suitable to achieve graphite evaporation. Thus, the wavelength of the laser system used to radiate the surface of the substrate is preferably comprised in the range of between 800 and 1200 nanometer (nm, 10⁻⁹ m), such as between 1000 and 1150 nm, or between 1030 and 1100 nm. Other wavelengths also suitable to achieve graphite evaporation may be used alternatively.

Like in the laser cladding deposition stage, in the laser cleaning stage the laser radiation is emitted from a laser processing head, which for example carries a nozzle. The emitted laser radiation passes through the nozzle, coaxially, along the longitudinal axis of the nozzle._For the laser beam to radiate onto the surface of the substrate in the cleaning stage, so that graphite is removed therefrom, the laser beam preferably travels defining any pattern (a line, a regular or irregular geometrical figure, or any other pattern) on the surface of the substrate to be exposed to the laser radiation. Same or similar operational features as those disclosed in the laser cladding deposition stage can be used in the laser cleaning stage (type of laser system, trajectory of the pattern followed by the laser beam, angular velocity of the substrate, linear movement of laser processing head, etc.).

By applying the laser cleaning treatment to the surface of the substrate, the amount of lamellar graphite in the upper portion of the substrate (i.e. most superficial thickness thereof of about 80 µm) is remarkably reduced. In particular, it has been observed that between 50 and 100% of the graphite lamellae present in the surface, in particular within a thickness of 30 µm from the surface, are evaporated due to the laser radiation.

So, when the disclosed laser cleaning treatment is applied on the surface of the substrate, evaporation of at least 50% of the lamellar graphite present in the vicinity of the surface of the substrate is achieved, without substantially damaging the substrate (for example, compromising its homogeneity or altering its microstructure) beneath this uppermost portion of the substrate.

For example, if the power of the laser beam is fixed to 2 kW and the cycle time is fixed to be 30 s, by selecting a diameter of laser spot between 1.5 and 2.1 mm, evaporation of lamellar graphite from the surface of the substrate is achieved in the cleaning stage, without substantially damaging the substrate. In this case, the applied density of energy on the surface of the substrate is between 17 and 32 kJ/mm². Or, if the power of the laser beam is fixed to 2 kW and the cycle time is fixed to be 120 s, by selecting a diameter of laser spot between 3.1 and 4.0 mm, evaporation of lamellar graphite from the surface of the substrate is achieved, without substantially damaging the substrate. The applied density of energy is also between 17 and 32 kJ/mm².

For example, if the power of the laser beam is fixed to 3 kW and the cycle time is fixed to be 30 s, by selecting a diameter of laser spot between 1.9 and 2.55 mm, evaporation of lamellar graphite from the surface of the substrate is achieved, without substantially damaging the substrate. In this case, the applied density of energy on the surface of the substrate is between 17 and 32 kJ/mm². Or, if the power of the laser beam is fixed to 3 kW and the cycle time is fixed to be 90 s, by selecting a diameter of laser spot between 3.2 and 3.82 mm, evaporation of lamellar graphite from the surface of the substrate is achieved, without substantially damaging the substrate. In this case, the applied density of energy on the surface of the substrate is between 20 and 35 kJ/mm².

For example, if the power of the laser beam is fixed to 4 kW and the cycle time is fixed to be 30 s, by selecting a diameter of laser spot between 2.2 and 2.95 mm, evaporation of lamellar graphite from the surface of the substrate is achieved, without substantially damaging the substrate. In this case, the applied density of energy on the surface of the substrate is between 17 and 32 kJ/mm². Or, if the power of the laser beam is fixed to 4 kW and the cycle time is fixed to be 80 s, by selecting a diameter of laser spot between 3.3 and 4.00 mm, evaporation of lamellar graphite from the surface of the substrate is achieved, without substantially damaging the substrate. In this case, the applied density of energy on the surface of the substrate is between 20 and 37.5 kJ/mm².

For example, if the power of the laser beam is fixed to 5 kW and the cycle time is fixed to be 30 s, by selecting a diameter of laser spot between 2.45 and 3.3 mm, evaporation of lamellar graphite from the surface of the substrate is achieved, without substantially damaging the substrate. In this case, the applied density of energy on the surface of the substrate is between 17 and 32 kJ/mm². Or, if the power of the laser beam is fixed to 5 kW and the cycle time is fixed to be 70 s, by selecting a diameter of laser spot between 3.4 and 4.00 mm, evaporation of lamellar graphite from the surface of the substrate is achieved, without substantially damaging the substrate. In this case, the applied density of energy on the surface of the substrate is between 27 and 38 kJ/mm².

For example, if the power of the laser beam is fixed to 6 kW and the cycle time is fixed to be 30 s, by selecting a diameter of laser spot between 2.7 and 3.6 mm, evaporation of lamellar graphite from the surface of the substrate is achieved, without substantially damaging the substrate. In this case, the applied density of energy on the surface of the substrate is between 17 and 32 kJ/mm². Or, if the power of the laser beam is fixed to 6 kW and the cycle time is fixed to be 55 s, by selecting a diameter of laser spot between 3.3 and 4.00 mm, evaporation of lamellar graphite from the surface of the substrate is achieved, without substantially damaging the substrate. In this case, the applied density of energy on the surface of the substrate is between 25 and 38 kJ/mm².

For example, if the power of the laser beam is fixed to 7 kW and the cycle time is fixed to be 30 s, by selecting a diameter of laser spot between 2.91 and 3.9 mm, evaporation of lamellar graphite from the surface of the substrate is achieved, without substantially damaging the substrate. In this case, the applied density of energy on the surface of the substrate is between 17 and 32 kJ/mm². Or, if the power of the laser beam is fixed to 7 kW and the cycle time is fixed to be 51 s, by selecting a diameter of laser spot between 3.5 and 4.00 mm, evaporation of lamellar graphite from the surface of the substrate is achieved, without substantially damaging the substrate. In this case, the applied density of energy on the surface of the substrate is between 27 and 38 kJ/mm².

For example, if the power of the laser beam is fixed to 8 kW and the cycle time is fixed to be 30 s, by selecting a diameter of laser spot between 3.11 and 4.00 mm, evaporation of lamellar graphite from the surface of the substrate is achieved, without substantially damaging the substrate. In this case, the applied density of energy on the surface of the substrate is between 19 and 32 kJ/mm². Or, if the power of the laser beam is fixed to 8 kW and the cycle time is fixed to be 45 s, by selecting a diameter of laser spot between 3.2 and 4.00 mm, evaporation of lamellar graphite from the surface of the substrate is achieved, without substantially damaging the substrate. In this case, the applied density of energy on the surface of the substrate is between 27 and 44 kJ/mm².

For example, if the power of the laser beam is fixed to 12 kW and the cycle time is fixed to be 25 s, by selecting a diameter of laser spot between 3.00 and 4.00 mm, evaporation of lamellar graphite from the surface of the substrate is achieved, without substantially damaging the substrate. In this case, the applied density of energy on the surface of the substrate is between 23 and 42 kJ/mm². Or, if the power of the laser beam is fixed to 12 kW and the cycle time is fixed to be 30 s, by selecting a diameter of laser spot between 3.2 and 4.00 mm, evaporation of lamellar graphite from the surface of the substrate is achieved, without substantially damaging the substrate. In this case, the applied density of energy on the surface of the substrate is between 28 and 44 kJ/mm².

While values of power above 12 kW and up to about 24 kW may perform correctly in the cleaning stage considering a required cycle time, the inventors have observed that values of power above 12 kW, and in particular in the vicinity of 24 kW, cause the substrate (brake disk) to deform. For example, it has been observed that the surface of the substrate loses its flatness (becomes curved) towards its outer perimeter due to the high power applied to the surface of the brake disk even if the cycle time is short. For this reason, values of laser power above 12 kW are less preferred, such as above 13 kW or above 14 kW.

In turn, although the inventors have observed a reduction of graphite in the surface of the substrate when the cleaning stage is applied using values of power below 2 kW, such as between 200 W and 2 kW, in this case the performance of the cleaning process is relatively good only for relatively long cycle times (for example about 120 s) with respect to short ones (for example about 30 s) because longer cycle times imply longer interaction between the applied power and the surface under treatment, therefore increasing the probability of evaporation of graphite from the surface of the substrate.

Considering a typical brake disc, when the mentioned parameters are applied (a laser beam emitting with power comprised in the range of between 2 and 12 kW, diameter of laser spot comprised in the range of between 1.5 and 4 mm), the substrate revolving at a linear velocity comprised in the range of 80 and 240 m/minute and the laser beam linearly moving at a velocity lower than 500 mm/minute), a circular ring-shaped surface of a substrate having an inner radius of between 160 and 230 mm and an outer radius of between 270 and 410 mm, requires a pre-treatment (laser cleaning) for removing graphite (cleaning pre-treatment) having a duration comprised in the range of 20 seconds and 55 seconds.

In embodiments, during the cleaning stage, a shielding gas is emitted onto the surface of the substrate. The shielding gas is for example emitted through a gas nozzle. The gas nozzle can be provided on the same laser processing head as the laser processing head carrying the nozzle through which the laser radiation is emitted. The shielding gas can be, for example, Nitrogen or Argon. The application of a shielding gas contributes to preventing the oxidation of the surface being treated after the cleaning treatment and contributes to the homogenization of the surface, for example by hiding or reducing the trace or track of the laser passes because the overlap between neighbor passes can be reduced. Without the shielding gas, the gas emitted during the evaporation of graphite tends to oxide the surface of the substrate. Besides, without shielding gas more time is required to homogenize the surface (i.e. reduce the trace of laser passes) because a larger overlap between neighbour passes is required.

In embodiments, the stage of depositing a coating layer involves depositing a first coating layer and a second coating layer onto the first coating layer, the first coating layer being for example made of metal, such as a steel, and the second coating layer being for example made of a mix of metal and a carbide, preferably, tungsten carbide or titanium carbide.

When two metallic coating layers are deposited, the stage of cleaning (pretreatment) the surface by radiating the surface with a laser beam (with no powder deposition) is only done before the application of the first coating layer (and not before the application of the second coating layer). Like in the laser deposition process to apply the first coating layer on the substrate, the second coating layer is applied using a laser beam providing a laser spot whose axis is misaligned with respect of the axis of the delivered powder spot. Besides, the area of the laser spot (as projected on the surface of the substrate) is greater than the area of the powder spot (as deposited on the surface), in similar relationship between diameters of laser spot and powder. The process of depositing the second coating layer is therefore substantially the same as the process of depositing the first coating layer, including type and size of powder material, except for the selection of certain operation parameters.

In some embodiments, the laser cladding deposition process involves applying two coating layers on the surface of the substrate. To deposit a second coating layer onto a first coating layer already deposited, the surface is radiated with a laser beam emitting with a power comprised in the range of between about 7 and about 18 kW during a suitably selected cycle time which is preferably between about 20 and about 55 seconds. Preferred values of power of the laser beam are comprised in the range of between about 7.5 kW and about 14 kW both included, more preferred between about 7.5 and about 12 kW both included, which have proven to perform correctly if suitable diameters of laser spot and cycle times are selected. Preferred values of diameters of the laser spot are comprised in the range of between about 1.5 and about 4 mm. Preferred values of diameters of the powder spot are comprised in the range of between 1 and 3.5 mm. Because the second coating layer has typically a thickness larger than the thickness of the first coating layer, it normally requires higher power and/or longer cycle time to melt the required powder.

In some embodiments of the second laser cladding deposition process to obtain a second coating layer, the laser beam provides a density of energy on the surface of the substrate in the range of between 25 kJ/mm² and 70 kJ/mm².

For example, if the power of the laser beam is fixed to 7 kW and the cycle time is fixed to be 30 s, by selecting a diameter of laser spot between 2.2 and 3.0 mm, a suitable second layer of metal-based coating is achieved. In this case, the applied density of energy on the surface of the substrate is between 29 and 54 kJ/mm². Or, if the power of the laser beam is fixed to 7 kW and the cycle time is fixed to be 50 s, by selecting a diameter of laser spot between 2.7 and 3.5 mm, a suitable layer of metal-based coating is achieved. In this case, the applied density of energy on the surface of the substrate is between 36 and 60 kJ/mm². Small diameters of laser spot are preferred because the diameter of the powder spot is only a bit smaller than that of the laser spot, and large powder particles require higher power to be melted.

For example, if the power of the laser beam is fixed to 8 kW and the cycle time is fixed to be 30 s, by selecting a diameter of laser spot between 2.2 and 3.0 mm, a suitable layer of metal-based coating is achieved. In this case, the applied density of energy on the surface of the substrate is between 33 and 63 kJ/mm². Or, if the power of the laser beam is fixed to 7 kW and the cycle time is fixed to be 50 s, by selecting a diameter of laser spot between 2.7 and 3.3 mm, a suitable layer of metal-based coating is achieved. In this case, the applied density of energy on the surface of the substrate is between 46 and 70 kJ/mm². Small diameters of laser spot are preferred because the diameter of the powder spot is only a bit smaller than that of the laser spot, and large powder particles require higher power to be melted.

For example, if the power of the laser beam is fixed to 9 kW and the cycle time is fixed to be 30 s, by selecting a diameter of laser spot between 2.3 and 2.9 mm, a suitable layer of metal-based coating is achieved. In this case, the applied density of energy on the surface of the substrate is between 40 and 65 kJ/mm². Or, if the power of the laser beam is fixed to 9 kW and the cycle time is fixed to be 50 s, by selecting a diameter of laser spot between 3 and 4 mm, a suitable layer of metal-based coating is achieved. In this case, the applied density of energy on the surface of the substrate is between 35 and 63 kJ/mm².

For example, if the power of the laser beam is fixed to 12 kW and the cycle time is fixed to be 30 s, by selecting a diameter of laser spot between 2.7 and 4 mm, a suitable layer of metal-based coating is achieved. In this case, the applied density of energy on the surface of the substrate is between 28 and 63 kJ/mm². Or, if the power of the laser beam is fixed to 12 kW and the cycle time is fixed to be 40 s, by selecting a diameter of laser spot between 3.1 and 4 mm, a suitable layer of metal-based coating is achieved. In this case, the applied density of energy on the surface of the substrate is between 38 and 63 kJ/mm².

In sum, thanks to the surface being thermally treated just before the powder spot is deposited, due to the difference in laser spot and powder spot diameters and also due to the misalignment between the axis of the powder cone and the axis of the laser beam, the laser heat applied to the surface thermally prepares the surface and additionally cleans it, preparing the surface to receive the material by removing additional graphite lamellae and therefore opening new empty spaces to be filled with metal-based powder (which quickly melts on the surface), but without creating undesirable bubbles in the surface of the substrate which would be formed if the material was deposited exactly at the same time as the laser heats the surface. Consequently, the deposited coating clad is flat, homogeneous and well integrated with the substrate.

A second aspect of the disclosure relates to a brake disk manufactured following the manufacturing method of the first aspect of the invention.

When the surface of the substrate has been cleaned following the disclosed laser cleaning stage, the thermal treatment applied in the subsequent laser cladding deposition process due to the decentering of axes, conditions or prepares the surface in a way that improves the adherence of the subsequently deposited coating because the laser radiation applied in the laser deposition process causes the elimination of additional lamellar graphite, typically present deeper in the substrate with respect to the most superficial thickness thereof. For example, while within the uppermost 30 µm of thickness of substrate, between 80 and 100% of the graphite has been evaporated in the laser cleaning stage, the additional laser treatment performed during the material deposition process causes the evaporation of graphite in a deeper region of the substrate, such as between 30 and 50 µm of depth. If these deeper graphite lamellae were not eliminated at this stage, they could explode during the deposit of powder because of the high temperature reached by the melt pool on the surface of the substrate, but the holes left open by the explosion could not be filled with molten material due to the quick cooling and solidification experienced by the melt pool. As a consequence, the obtained coating layer will have undesired holes. For this reason, it is highly recommended that the removal of additional graphite lamellae does not occur exactly at the same time as powder is delivered and melted on the substrate, but a little bit in advance, to prevent the creation of hollows and "bubbles" at the same time as material is being deposited.

A third aspect of the disclosure relates to a brake disk manufacturing device, comprising:
a laser system for cladding deposition, having a laser head and being configured for depositing a metal-based coating layer onto a surface of a substrate for manufacturing a brake disk, the substrate being made of a graphite-containing metallic material, by applying a laser cladding deposition, wherein the laser system for cladding deposition is configured such that powder is deposited onto the surface while a laser beam is radiated onto the surface, wherein the powder is delivered from a powder nozzle coupled to the laser head from which the laser beam is radiated, so that the powder being delivered and the laser beam move jointly over the surface to be coated as the laser head moves,
wherein the diameter of a laser spot applied on the surface by the laser beam is greater than the diameter of a powder spot deposited on the surface from the powder nozzle, and the axis of the laser spot applied on the surface is misaligned with respect to the axis of the powder spot delivered to the surface.

In some embodiments, the brake disk manufacturing device further comprises a laser system for cleaning, configured for removing graphite from the surface of the substrate for manufacturing a brake disk prior to cladding deposition of a metal-based coating layer onto the surface of the substrate, laser system for cleaning, configured for removing graphite from the surface of the substrate by applying a cleaning stage in which the surface is radiated with a laser beam, using commonly the laser head of laser system for cladding deposition or a distinct laser head.

In some embodiments, the brake disk manufacturing device further comprises a rotating device, configured for rotating the substrate of the brake disk during the application of the cleaning stage and/or during the deposition of a metal-based coating layer, while the laser head(s) from which the laser beam is emitted move(s) linearly on the surface of the substrate, said linear movement following a radial trajectory on the surface of the substrate.

In some embodiments, the rotating device is configured such that the brake disk rotates at a linear velocity comprised in the range of 80 and 240 m/minute, more preferably in the range of 120 and 200 m/minute.

In some embodiments of the brake disk manufacturing device, the axis of the powder spot is misaligned with respect to the axis of the laser spot in an amount between 0 and 20% of the diameter of the laser spot, preferably between 2.5 and 20% thereof, more preferably between 2.5 and 15% thereof, still more preferably between 5 and 12.5 thereof.

In some embodiments, the laser system for cladding deposition is configured for operation in the laser cladding deposition for depositing a metal-based coating layer onto the surface of the substrate such that the diameter of the laser spot is between 10 and 40% larger than the diameter of the powder spot.

In some embodiments, the laser system for cladding deposition is configured for operation in the laser cladding deposition for depositing a metal-based coating layer, such that the power of the laser beam is in a range between 6 kW and 16 kW, preferably between 7 kW and 12 kW, and more preferably between 7.5 and 10kW; and the cycle time is preferably between 20 and 55 seconds.

In some embodiments, the laser system for cladding deposition is configured such that the diameter of the laser spot used in the laser cladding is in a range between 1.5 and 4 mm, preferably between 2 and 4 mm, more preferably between 2.2 and 3.7 mm, and still more preferably between 2.5 and 3.5 mm; and the diameter of the powder spot is in a range between 1 and 3.5 mm, preferably between 1 and 2.5 mm, and more preferably between 1 and 2 mm.

In some embodiments, the laser system for cladding deposition is configured for operation in the laser cladding deposition for depositing a metal-based coating layer, such that a density of energy on the surface of the substrate is applied in the range of between 14 kJ/mm² and 50 kJ/mm².

In some embodiments, the laser system for cleaning is configured such that during the application of the cleaning stage, the surface is radiated with a laser beam emitting with a power comprised in the range of between 2 and 12 kW with a diameter of the laser spot comprised in the range of between 1.5 and 4 mm.

In some embodiments, the laser system for cleaning is configured such that in the cleaning stage the surface is radiated with a laser beam emitting with a power comprised in the range of between 4 and 8 kW, more preferably between 5 and 7 kW.

In some embodiments, the laser system for cleaning is configured such that in the cleaning stage the diameter of the laser spot used to remove graphite is in a range between 2 and 4 mm, preferably between 2.2 and 3.7 mm and more preferably between 2.5 and 3.5 mm.

In some embodiments, the laser system for cleaning is configured such that in the cleaning stage the laser beam provides a density of energy on the surface of the substrate in the range of between 10 and 45 kJ/mm².

In some embodiments, the brake disk manufacturing device further comprises a shielding gas supply, configured such that during the application of the cleaning stage and/or during the deposition of a metal-based coating layer, a shielding gas is emitted onto the surface of the substrate while the surface is radiated with the laser beam, wherein the shielding gas is Nitrogen or Argon.

A fourth aspect of the disclosure relates to a use of the brake disk manufacturing device of the third aspect for providing a brake disk, wherein in the laser cladding deposition one single layer is deposited, the one single layer being preferably made of a mix of a metal and a carbide, wherein the metal is preferably steel and the carbide is preferably tungsten carbide or titanium carbide.

A fifth aspect of the disclosure relates to a use of the brake disk manufacturing device of the third aspect for providing a brake disk, providing a first metal-based coating layer by laser cladding deposition, further comprising providing a second laser cladding deposition to deposit a second metal-based coating layer onto the first metal-based coating layer.

In some embodiments of the fifth aspect, the laser system for cladding deposition is configured for operation in the laser cladding deposition for depositing the second metal-based coating layer, such that the power of the laser beam is in a range between 7 and 18 kW, preferably between 7.5 and 14 kW, and more preferably between 7.5 and 12kW; and the cycle time is selected to be between 20 and 55 seconds.

In some embodiments of the fifth aspect, the laser system for cladding deposition is configured for operation in the laser cladding deposition for depositing the second metal-based coating layer, such that a density of energy on the surface of the substrate is in the range of between 25 and 70 kJ/mm².

In some embodiments of the fifth aspect, the laser system for cladding deposition is configured for operation in the laser cladding deposition such that in the first laser cladding deposition a layer made of metal, preferably steel, is applied; and in the second laser cladding deposition a layer made of a mix of a metal and a carbide, wherein the metal is preferably steel and the carbide is preferably tungsten carbide or titanium carbide, is applied.

A sixth aspect of the disclosure relates to a brake disk manufactured with the brake disk manufacturing device of the third aspect and/or under the use of any one of the fourth and fifth aspects, preferably the substrate is made of grey cast iron.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1A shows a photograph of a conventional brake disk prior to applying any treatment thereon. Figures 1B and 1C show photographs of the brake disk after applying a laser-based cleaning treatment according to this disclosure. Figures 1D and 1E show photographs of a brake disk like the one in Figure 1A, after applying a laser-based cleaning treatment according to this disclosure.
Figures 2A and 2B schematically show a laser cladding deposition process applied to the previously cleaned surface of a substrate, according to embodiments of the disclosure.
Figure 3 schematically shows a section of a laser cladding system that can be used in a laser cladding deposition process according to embodiments of the disclosure.
Figure 4 schematically shows the shape of a metallic clad formed on the substrate while metal-based powder is being deposited in a laser cladding deposition process according to embodiments of the disclosure.
Figures 5A and 5B schematically show how the laser beam can be applied to the surface of the substrate under treatments according to embodiments of the disclosure.
Figures 6A and 6B show OM images of brake disks to which a single coating layer has been applied.
Figures 7A-7B show a cross-sectional view of a clad of AISI 316L applied on the surface of a substrate of a brake disk to which no precleaning process nor decentering of axes in the laser cladding process have been applied.
Figure 8 shows a OM image of brake disks to which a single coating layer has been applied.
Figure 9 shows a OM image of a coating layer applied to a brake disk according to embodiments of this disclosure.
Figure 10 shows a cross-sectional view a substrate to which two coating layers have been applied following embodiments of this disclosure.
Figure 11 shows a cross-sectional view a substrate to which two coating layers have been applied following embodiments of this disclosure.
Figure 12 shows a cross-sectional view a substrate to which two coating layers have been applied following embodiments of this disclosure.
Figures 13A and 13B schematically show a cleaning treatment applied to a surface of a substrate of a brake disk according to embodiments of the disclosure.
Figures 14A and 14B show SEM images of the surface of a substrate after being treated with the laser cleaning process according to embodiments of the disclosure.
Figures 15A, 15B and 15C show cross sections of a substrate after being treated with the laser cleaning process according to embodiments of the disclosure.

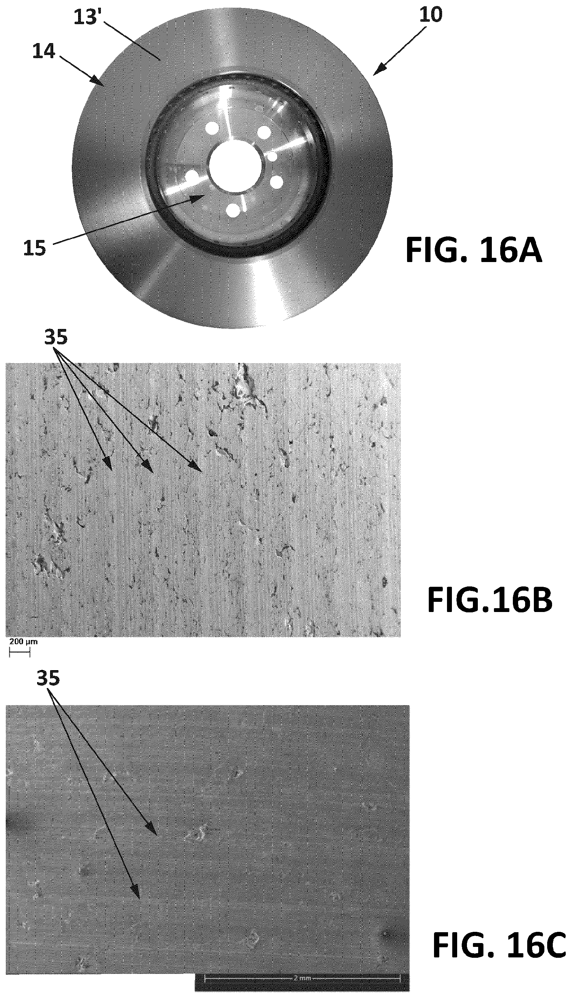

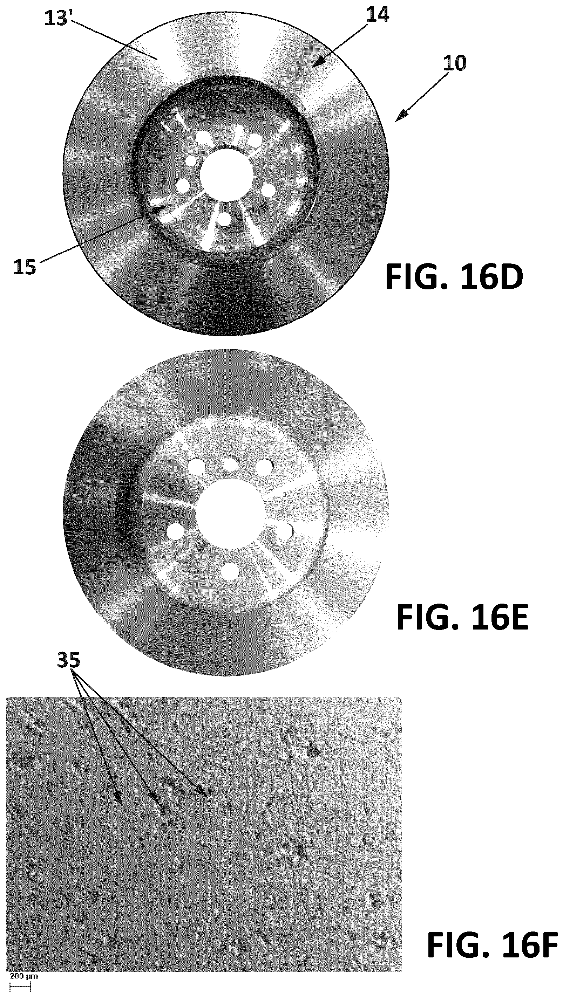

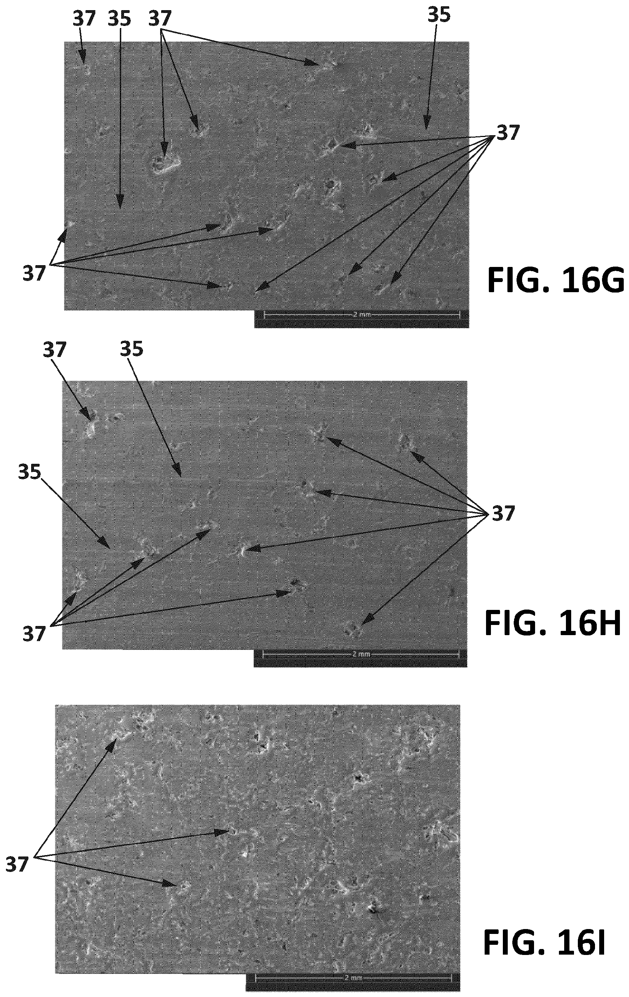

Figure 16A shows a photograph of the brake disk, prior to applying any treatment thereon. Figure 16B shows a SEM image of the surface of a substrate without laser cleaning. Figure 16C shows a SEM image of the surface of a brake disk to which no laser cleaning process or different laser cleaning processes have been applied. Figures 16D and 16E show brake disks after a laser cleaning process has been applied. Figure 16F shows a SEM image of the surface of the substrate after applying a laser cleaning process according to embodiments of the disclosure. Figures 16G-16I show SEM images of brake disks to which no laser cleaning process or different laser cleaning processes have been applied.
Figures 17A and 17B show a photograph of a brake disk after applying a laser treatment and laser cladding deposition process according to embodiments of the disclosure.
Figures 18A to 18C show OM images of brake disks to which a single coating layer has been applied following the disclosed laser cladding process. In all cases in the laser cladding process the density of energy of the applied laser beam is 39821 J/mm².
Figures 19A to 19D show OM images of brake disks to which a single coating layer has been applied without misaligning the axis of the laser spot and the axis of the powder spot. In all cases in the laser cladding process the density of energy of the applied laser beam is 39821 J/mm².
Figure 20 shows an OM image of a brake disk to which a single coating layer has been applied following the disclosed laser cladding process. The density of energy of the applied laser beam is 28937 J/mm².
Figures 21A and 21B show a manufactured brake disk following the disclosed processes of laser treatment and laser cladding deposition to deposit two coating layers according to embodiments of the disclosure.
Figures 22A-22D show cross sections of the brake disk after being completely manufactured following the disclosed processes of laser treatment and laser cladding deposition according to embodiments of the invention. Figures 22A and 22C are SEM images. Figures 22B and 22D are OM images.
Figure 23 shows an OM image of a brake disk to which two coating layers have been applied without misaligning the axis of the laser spot and the axis of the powder spot.

### DESCRIPTION OF A WAY OF CARRYING OUT THE INVENTION

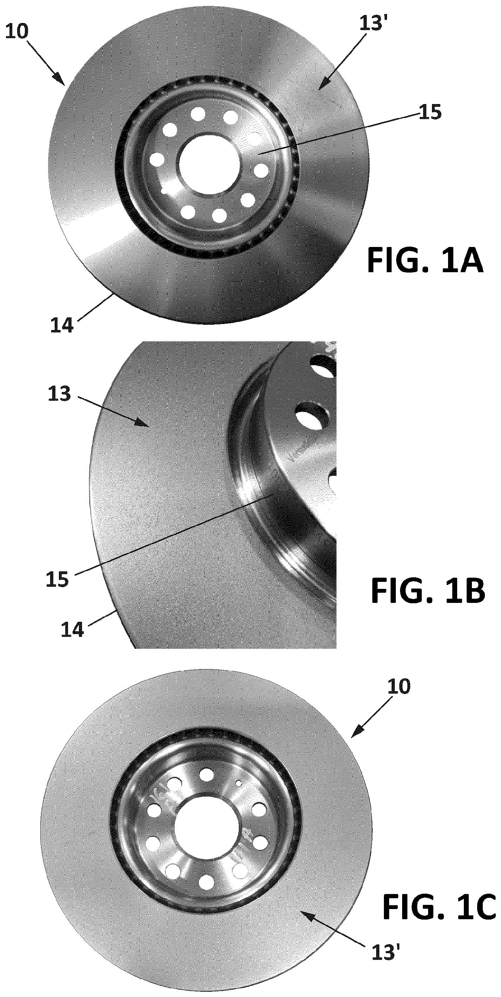

Figures 1A and 16A show photographs of conventional brake disks 10 prior to applying any treatment thereon (no laser cleaning treatment has been yet applied to the substrate, nor laser cladding deposition layer(s)). The brake disks are made of a substrate of a metallic material, which in the shown embodiment is grey cast iron. The disks are wheel-shaped and have an inner disk portion 15 and an outer disk portion 14 surrounding (external to) the inner disk portion 15. Both portions 14, 15 have cylindrical shape, the inner one 15 being thicker than the outer one 14. For this reason, the inner portion 15 can be referred to as a "hat", because of its shape resembling the crown of a hat, while the outer disk portion 14 resembles the brim of a hat. The outer disk portion 14 defines a ring having an inner radius and an outer radius. The outer disk portion 14 has two outer friction circular ring-shaped surfaces opposing each other. The inner diameter of the outer disk portion 14 of the disk shown in Figure 1A is 177 mm and its outer diameter is 306 mm. The inner diameter of the outer disk portion 14 of the disk shown in Figure 16A is 220 mm and its outer diameter is 350 mm. In the top view of Figures 1A and 16A only one friction surface 13' is visible.

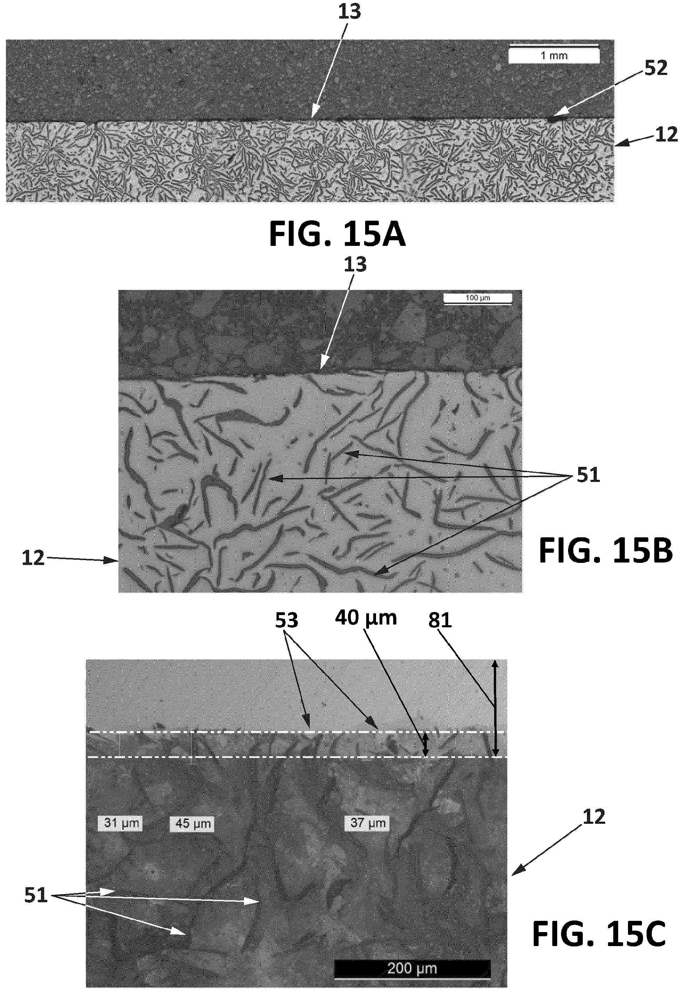

During a braking operation, these surfaces are pressed against a brake pad so that the brake disk is braked. The shown brake disk 10, and in particular its outer portion 14, is made of grey cast iron. From now on, reference sign 12 is used to refer to the substrate of the outer portion 14, which is the portion which needs to be treated by laser, although the inner portion (hat portion) 15 of the brake disk may be made of the same material (grey cast iron in the shown example). Substrate 12 contains graphite, in particular lamellar graphite, as shown for example in Figures 15A and 15B (dark lamellae 51 in Figure 15B), disclosed in detail later.

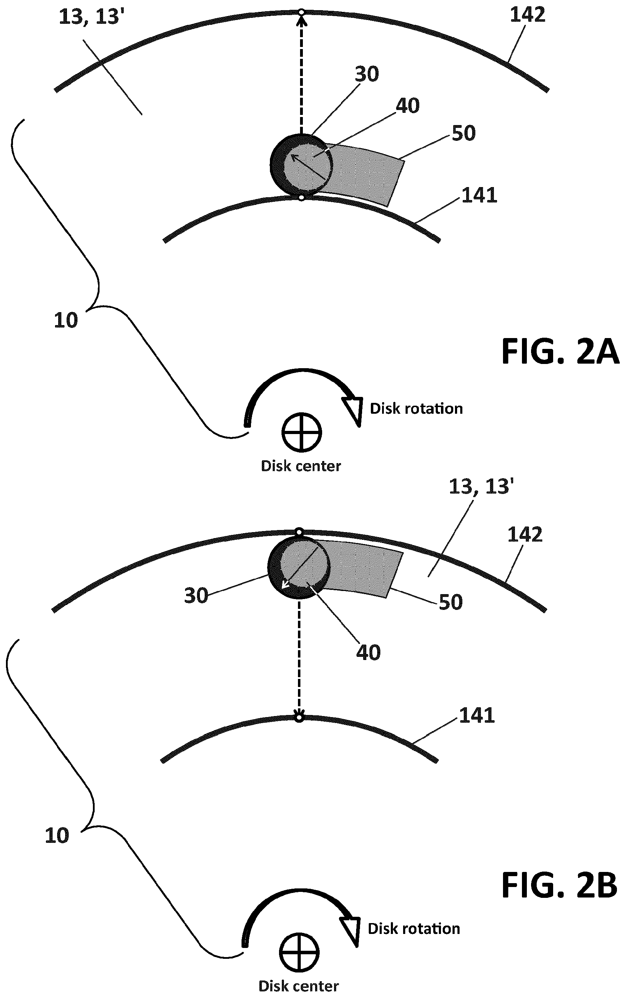

Figures 2A and 2B schematically show a laser cladding deposition process to apply one or more coating layers on a surface 13, 13' of the substrate to obtain a manufactured brake disk, that is to say, a brake disk having increased resistance to wear and corrosion and/or increased friction coefficient with respect to the resistance to wear and corrosion and/or friction coefficient of a non-coated brake disk. The surface can be any of the two surfaces 13, 13' of the outer disk portion 14. The brake disk may be coated with one or more coating layers, such as one or two coating layers, or even more than two coating layers, depending on different factors, such as the expected performance of the manufactured brake disk. The coated surface shall be a friction surface of a brake disk.

The at least one coating layer is applied using a laser cladding deposition process, in which powder is deposited onto the surface 13, 13' of the substrate, while a laser beam is radiated onto the surface 13, 13' to be coated from a laser head which is moved along the surface to be treated while the disk rotates. The powder is delivered from a powder nozzle coupled to the laser head from which the laser beam is radiated, so that the laser beam and the powder nozzle move together radially along the surface to be coated as the laser head moves.

To deposit a coating layer on the surface 13, 13', a laser beam head performs a radial movement along the radius of the substrate while the substate rotates. The surface can be any of the two surfaces 13, 13' of the outer disk portion 14. In Figures 2A and 2B only a radial portion of the disk 10 (and therefore a radial portion of the substrate 12 defining a friction surface 13, 13') is shown. The shown portion includes the disk center (identified with a cross surrounded by a circle) and the inner 141 and outer 142 radius of the substrate 12 whose surface 13, 13' is to be treated. A coating layer is applied on the surface 13, 13' by applying a laser cladding deposition process on the surface 13, 13'. Laser radiation is emitted from a laser processing head, not shown, which for example carries a nozzle through which the laser radiation is emitted. The laser head (not shown) carrying the laser beam also carries an attached powder nozzle (not shown) coupled to the laser head. The powder nozzle pours powder while the laser head moves. Usually, a carrier gas is used to drag or pull the powder towards the surface under treatment.

The surface 13, 13' is radiated with a laser beam defining a laser spot 30 on the surface of the substrate. In an embodiment, the movement of the laser beam and therefore of the laser spot 30 on the surface 13, 13' is illustrated with a straight dotted arrow in Figures 2A and 2B. Figure 2A shows the start of a laser cladding deposition process in a particular embodiment. In this case, the point from which the laser beam starts moving is a point on the inner radius 141 of the substrate 12. The laser beam could similarly start moving at a point on the outer radius 142 of the substrate 12, as shown in Figure 2B. In any case, simultaneously to the movement of the laser beam, the substrate 12 revolves around its axis of rotation with a certain angular velocity. The curved arrow surrounding the disk center in Figures 2A and 2B represents the rotation of the disk (substrate 12). In preferred embodiments, the linear velocity of the laser beam (and powder delivered from the powder nozzle coupled to the laser head) is constant and the angular velocity (RPM) of the disk is configured to vary depending on the radial position of the laser beam and therefore laser spot 30 and powder spot 40 on the surface under treatment, in such a way that the actual linear velocity of the disk is constant and the interaction of the laser beam (and deposited powder) on the substrate is also constant. The simultaneous linear advance of the laser head along the linear trajectory shown with a dotted line 21 (from a point on the inner radius 141 of the substrate 12 to a point on the outer radius 142 of the substrate 12, or vice versa) and the rotation of the substrate 12 generates a spiral-shaped laser radiation trajectory on the substrate 12.

Once the laser beam and therefore laser spot 30 and powder spot 40 have radially moved from the inner radius 141 of the substrate 12 to the outer radius 142 thereof, or vice versa, either a return trajectory is followed by the laser spot 30 and powder spot 40 while the substrate 12 revolves, or the laser equipment is taken to its original position (for example, the starting position on the inner radius 141) and a one-way movement is started again while the substrate 12 revolves. This linear movement (either back-and-forth or one-way) of the laser head and powder nozzle while the substrate 12 rotates is repeated for a predetermined period of time, until a coating layer has been applied on the surface 13 of the substrate 12.

Thus, powder is being delivered onto the surface 13, 13' in the form of powder spots 40 with the aim of depositing a coating layer. Each area of surface 13, 13' to be covered preferably receives a single pass of powder, meaning that, to obtain a coating layer, powder is preferably not stacked, or at least the overlapping of material should be minimized. Thus, the movement followed by the laser head and the relative velocities of the laser head and disk are configured so that a substantially homogeneous coating layer finally covers the surface. In other words, by delivering the powder as described, a kind of metal-based cord or clad is deposited on the substrate and additional cords or clads are deposited adjacent each other, without substantial overlapping of cords, or at least with reduced overlapping, so that a substantially flat coating layer is achieved on the surface 13, 13' of the substrate 12. A sketch of the metal-based cord or clad 50 being deposited on the surface is shown in Figures 2A and 2B.

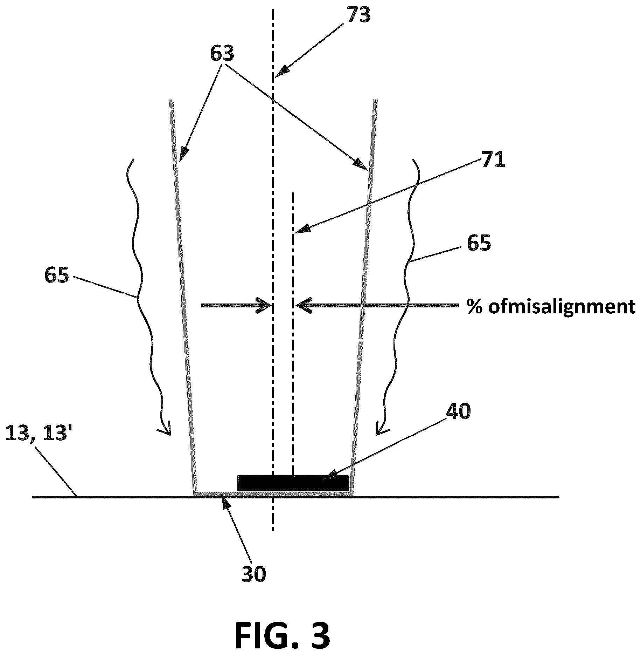

Figure 3 schematically shows a longitudinal section of a laser system that can be used in the laser cladding deposition process to deposit one or more coating layers onto the surface 13, 13' of a substrate. The laser head (not shown) emitting the laser beam 63 and the nozzle (not shown) carrying the powder to be delivered travel together. Typically, the laser beam 63 is confined within a nozzle (not shown), within the open space delimited (surrounded) by the nozzle, in such a way that a laser spot 30 is projected on the surface 13, 13' under treatment. The laser spot is circular. To deposit a coating layer to coat the substrate 13, 13', the energy distribution of the laser beam can for example be a top hat distribution. The powder is in turn delivered from a nozzle onto the surface 13, 13' under treatment, forming a powder spot or clad 40 thereon. During operation of the laser system to perform the laser cladding deposition process, a shielding gas 65 can be emitted onto the surface of the substrate, for example through a gas nozzle which travels simultaneously with the laser head. The gas nozzle can be the same one as the powder nozzle, or there can be two different nozzles which are preferably fixed to each other, so that they travel together following the same trajectory. The shielding gas can be, for example, Nitrogen or Argon. For example, an amount of gas in the range of about 10 to about 25 liters per minute is applied. The inventors have observed that the application of a shielding gas contributes to preventing the oxidation of the surface being treated after the laser deposition process and contributes to the quick homogenization of the surface.

The axis 71 of the powder spot 40 is misaligned (de-centered) with respect to the axis 73 of the laser spot 30 in an amount of between 0 and 20% of the diameter of the laser spot, preferably between 2.5 and 15% thereof, more preferably between 5 and 12.5% thereof. The area of the laser spot 30 is preferably selected to be greater than the area of the powder spot 40. Preferably, it is chosen a laser system emitting a laser beam 63 having a diameter of the laser spot 30 (as projected on the surface 13, 13' of the substrate 12) between 10% and 40% greater than the diameter of the powder spot 40 deposited onto the surface 13, 13'. In several experiments, the diameter of the laser spot 30 is about 20% larger than the diameter of the powder spot 40 and the axis 71 of the powder spot 40 is misaligned with respect to the axis 73 of the laser spot 30. Therefore, due to the misalignment of the axis 71 of the powder spot 40 with respect to the axis 73 of the laser spot 30, a portion of the laser spot 30 reaches an area on the surface 13 being treated in advance with respect to the deposit of the powder (metallic spot) 40 on the surface. In Figures 2A and 2B the dotted straight arrow represents the linear trajectory followed by the laser beam and powder nozzle. Reference sign 50 represents a schematic sketch of the clad of powder spot (i.e. forming a kind of cord) formed on the surface 13 of the substrate 12 while the laser beam, powder nozzle and substrate move. This sketched cord of powder 50 is approximate and does not exactly represent an actual trace formed by the powder clad taking into account the linear advance of the laser head and nozzle and the rotation of the substrate. This process is done for a predetermined period of time, until a complete coating layer has been deposited on the substrate 13.

The surface 13, 13' is radiated with a laser beam providing a power preferably comprised in the range of between about 6 and about 16 kW with a diameter of the laser spot comprised in the range of between about 1.5 and about 4 mm. By adjusting the cycle time, a density of energy on the surface of the substrate comprised in the range of between about 14 kJ/mm² and about 50 kJ/mm² is applied. For example, a laser system providing a power of 8 kW following a "top hat" laser energy distribution, a wavelength of 1064 nm and a laser spot of 2.7 mm can be used. A "top hat" energy distribution provides a substantially constant power along the whole surface of the produced laser spot. The emitted power is a parameter that can be regulated by the user, so that the applied laser power can be fixed as required, in this example, 8kW, without exceeding the maximum power provided by the laser system. The inventors have found out that a laser having a "top hat" energy distribution performs efficiently because it guarantees a homogeneous power distribution on the whole laser spot. It therefore homogeneously heats the surface on which the laser beam is irradiated while enables the melting of the delivered powder. Alternatively, a laser having a ring-shaped (donut-type) energy distribution can be used, for example a laser having a certain maximum power on an outer ring (also called outer corona) of the laser spot and a certain different power, lower than the maximum one, on the core of the laser spot. A powder nozzle is selected such that the diameter of the powder spot delivered on the surface of the substrate is in a range between 1 and 3.5 mm, this diameter being preferably smaller than the diameter of the laser spot.

Considering typical diameters of conventional brake disks, the substrate 12 preferably rotates at a linear velocity comprised in the range of about 80 and about 240 m/minute. The velocity of the laser beam depends on the disk dimensions and is therefore adjusted accordingly.

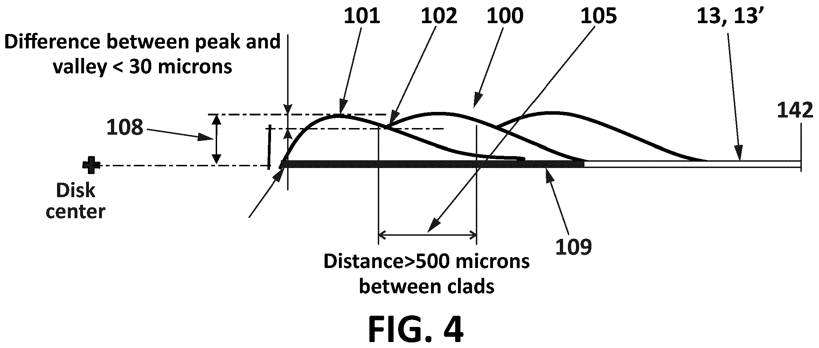

Figure 4 schematically shows the shape (outline) of the metal-based clad 100 (deposited in the form of a "cord") formed on the substrate while the powder is being deposited following the disclosed laser cladding deposition process in which the axis 71 of the powder spot 40 has been decentered with respect to the axis 73 of the laser beam and laser spot 30. It has been observed that, for a coating layer having a thickness 108 of for example between 120-150 µm, the difference between peaks 101 and valleys 102 on the surface of the clad 100 does usually not exceed 30 µm. The distance 105 between consecutive clads (deposited powder spots) is usually larger than 500 µm when the diameters of laser spot and powder spot are larger than 1.5 mm. The laser heating (thermal treatment) performed during the laser cladding deposition process, immediately before the powder deposition, is referred to as 109.

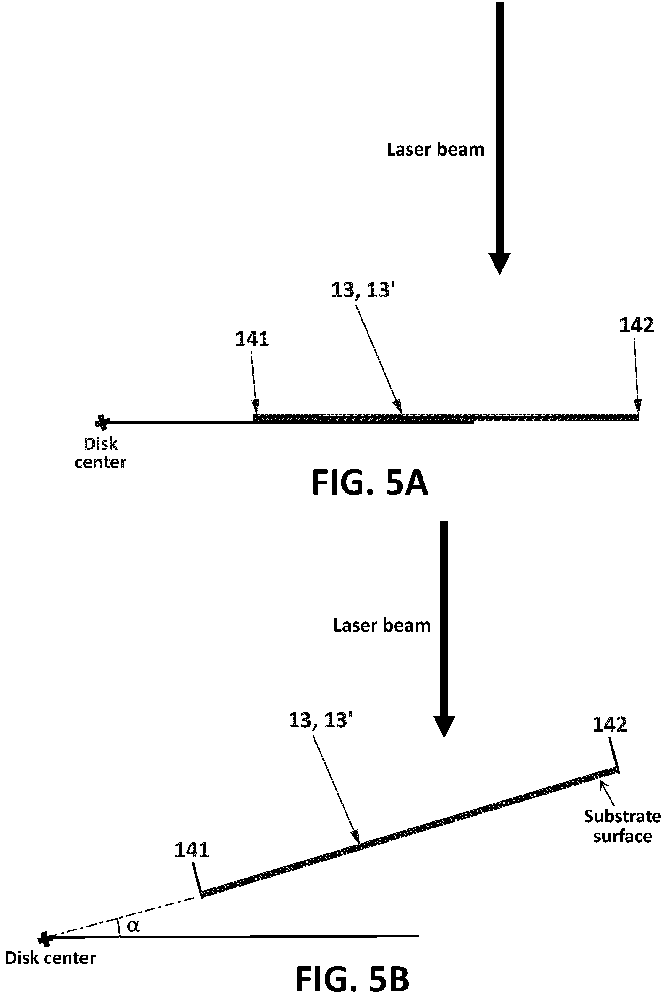

The laser cladding deposition process can be applied either perpendicularly to the surface under treatment (see for example Figure 5A, in which the powder nozzle is not shown) or with a certain tilting between the surface under treatment and the laser beam and powder deposition (see for example Figure 5B, in which the powder nozzle is not shown). The tilting can be achieved either by tilting the plane on which the surface to be treated lies with respect to a plane perpendicular to the laser beam (as shown in Figure 5B), or by tilting the nozzles and laser head (which travel together and maintain a fixed relative position between each other) with respect to a horizontal plane on which the substrate lies (not shown). Preferably, the tilting angle is comprised in the range of 0 and 30 degrees, 0° corresponding to the laser beam being perpendicular to the surface under treatment (Figure 5A, disk not tilted). In Figure 5B, the tilting angle α is > 0°, meaning that the disk is tilted with respect to the laser beam. The tilting of the substrate with respect to the axis of the laser beam does not affect the laser treatment nor the removal of graphite or application of a coating layer. The substrate is tilted with respect to the laser beam if it is necessary depending on the circumstances, for example to prevent the laser head (which can optionally carry a nozzle for transporting the protection or shielding gas to be delivered to the brake surface) from colliding with the substrate 12 of with the disk hat 15 and/or to prevent laser beam reflections from traveling back to the laser head. These laser beam reflections could damage the optical elements which are in the optical path of the laser beam.

Optionally, a second coating layer can be applied on the first coating layer following a similar process as the one used to deposit the first coating layer. The schematic process shown in Figures 2A and 2B are also applicable to deposit the second coating layer.

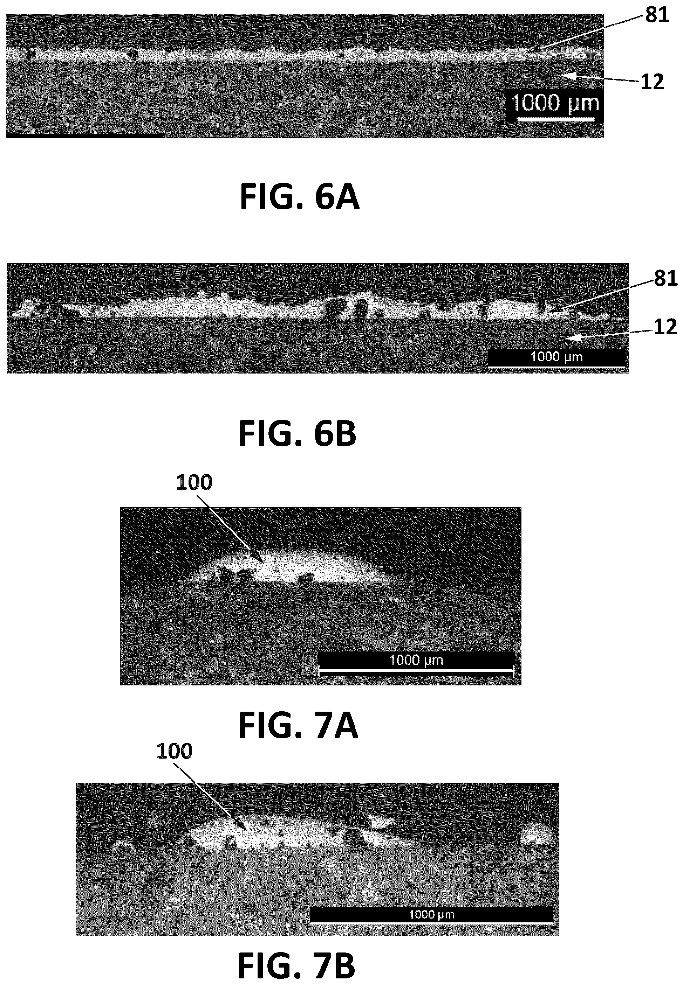

A first experiment has been made with the disk shown in Figure 1A. In this experiment, a single coating layer has been applied following the disclosed laser cladding deposition process. In particular, the laser cladding process to deposit the coating layer has been applied with the following process parameters: laser type: top hat; circular laser beam; diameter of laser beam = 2.7 mm; power = 7.6 kW; velocity = 150 m/min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs. The axis of the powder cone was decentered with respect to the axis of the laser beam about 400 µm. A microscope image of the of brake disk (substrate 12) after applying the coating layer 81 is shown in Figure 6A. In Figure 6A it can be observed that the coating layer 81 has a reduced number of holes or bubbles and the coating layer 81 is well integrated with the substrate 12. This relatively good performance is achieved thanks to the misalignment of powder spot and laser spot during the powder deposition process. It has been observed that the heating (thermal treatment) applied to the surface immediately before receiving the molten powder during the deposition process contributes to prevent the appearance of large amounts of holes or bubbles caused by the explosion of graphite during the deposition of metal-based material. The resulting brake disk thus has improved resistance to wear and friction coefficient.

The brake disk of Figure 6A has been compared with a brake disk like the one shown in Figure 1A, to which the same laser deposition process has been applied laser type: top hat; circular laser beam; diameter of laser beam = 2.7 mm; power = 7.6 kW; velocity = 150 m/min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs. However, in this case, the axis of the powder cone was aligned with respect to the axis of the laser beam. A microscope image (OM image) of the of brake disk (substrate 12) after applying the coating layer 81 under these conditions is shown in Figure 6B. As can be observed, the sample of Figure 6B performs very poorly. In the coating layer 81 many holes can be observed. There are also holes or bubbles in the interface between the coating layer 81 and the substrate 12, causing the bad integration between the coating layer and the substrate. The holes or bubbles have been created due to the explosion of graphite lamellae during the powder deposition process.

The poor integration and adherence of the coating material with the surface of the substrate when no decentering (misalignment) of axes in the laser cladding process are applied, can be observed in Figures 7A and 7B, which show cross-sectional views of a clad 100 made of AISI 316L deposited on a grey-cast iron substrate to which no misalignment of the powder spot axis with respect to the laser spot axis has been applied. Holes left open by the explosion of graphite during the laser cladding process can be observed.

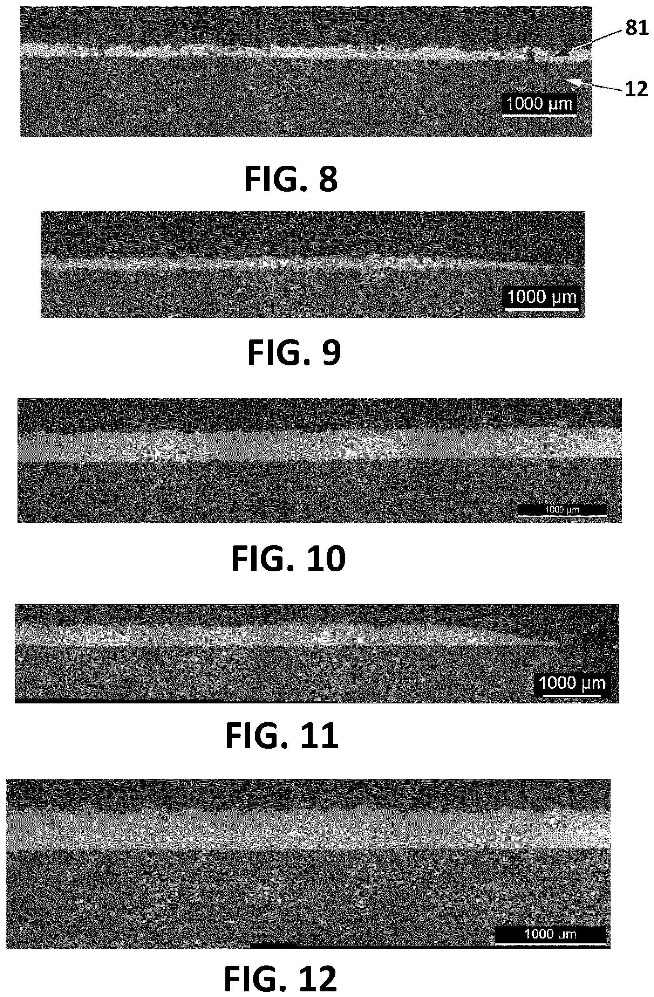

A second experiment has been made with a brake disk like the one in Figure 16A. A single coating layer has been deposited applying the following laser cladding process: laser type: top hat; circular laser beam; diameter of laser spot = 3.3 mm; power = 8.25 kW; velocity = 120 m/min; cycle time = 30 s; applied density of energy: 28,937.26 J/mm²; diameter of powder spot = 2.8 mm; flow rate of powder = 105 g/min; type of gas: N₂; carrier gas flow = 11 I/min; shielding gas: N₂; shielding gas flow = 8 I/min; type of powder: AISI 316L (stainless steel) (diameter of particles varying in the range of 20-53 µm). The axis of the powder spot was misaligned (decentered) with respect to the axis of the laser beam and laser spot about 400 µm. A suitable coating layer made of AISI 316L has been obtained. Its thickness is 100 µm ±40 µm. Figure 8 (microscope image) shows the resulting coating layer 81 deposited on the surface of the substrate 12. The coating layer 81 presents only a few holes and is relatively well integrated with the substrate 12. This relatively good result is achieved thanks to the misalignment of powder spot and laser spot during the powder deposition process. The laser deposition process applied with misalignment of the axes enables the surface to be heated just before molten metal is received thereon, which reduces the appearance of holes or bubbles caused by the explosion of graphite during the deposition process. The resulting brake disk thus has improved resistance to wear and friction coefficient.

A third experiment has been made with a brake disk like the one shown in Figure 1A. The following operational parameters were applied: applied laser power = 9000 W, cycle time = 30 s, circular laser spot, diameter of laser spot = 3.3 mm and applied density of energy = 31567.92 J/mm². The axis of the laser beam was misaligned with respect to the axis of the powder nozzle about 400 µm. A suitable coating layer made of AISI 430L has been obtained. Its thickness is 100 µm ±40 µm. Figure 9 shows a microscope image of the obtained coating layer. The coating layer barely presents holes and is well integrated with the substrate.

A fourth experiment has been made to deposit a second coating layer on a surface of a brake disk like the one in Figure 1A, on which a first coating layer had been already deposited. The laser cladding process to deposit the first coating layer has been applied with the following process parameters: Applied laser = 8750 W, cycle time = 30 s, circular laser spot, diameter of laser spot = 3.3 mm and applied density of energy = 30691.04J/mm². The axis of the laser beam was misaligned with respect to the axis of the powder nozzle about 400 microns. A suitable first coating layer made of AISI 316L has been obtained. Its thickness is 100 µm ±40 µm. The laser cladding process to deposit the second coating layer has been applied with the following process parameters: Applied laser = 8850 W, cycle time = 46 s, circular laser spot, diameter of laser spot = 3.3 mm and applied density of energy = 47597.41 J/mm2. The axis of the laser beam was misaligned with respect to the axis of the powder nozzle about 400 microns. On top of the first coating layer, a suitable second coating layer made of AISI 316L+WC has been obtained. Its thickness is of 180 ±40 µm. Figure 10 shows a cross-sectional view of the substrate and the applied two coating layers. Both are well integrated (the first one with the substrate, the second one with the first one) and the presence of undesired holes or bubbles is relatively scarce.

A fifth experiment has been made to deposit a second coating layer on a surface of a brake disk like the one in Figure 1A, on which a first coating layer had been already deposited. The laser cladding process to deposit the first coating layer has been applied with the following process parameters: Applied laser = 9000 W, cycle time = 30 s, circular laser spot, diameter of laser spot = 3.3 mm and applied density of energy = 31567.92 J/mm². The axis of the laser beam was misaligned with respect to the axis of the powder nozzle about 400 microns. A suitable first coating layer made of AISI 430L has been obtained. Its thickness is 100 µm ±40 µm. The laser cladding process to deposit the second coating layer has been applied with the following process parameters: Applied laser power = 9 kW, cycle time = 46 s, circular laser spot, diameter of laser spot = 3.3 mm and applied density of energy = 48404.15 J/mm2. The axis of the laser beam was misaligned with respect to the axis of the powder nozzle. A suitable second coating layer made of AISI 430L+TiC has been obtained, having thickness of 180 ±40 µm. Figure 11 shows a cross-sectional view of the substrate and the applied two coating layers. Again, both layers are well integrated (the first one with the substrate, the second one with the first one) and with little presence of undesired holes or bubbles.

A sixth experiment has been made to deposit a second coating layer on a surface of a brake disk like the one in Figure 1A, on which a first coating layer had been already deposited. The laser cladding process to deposit the first coating layer has been applied with the following process parameters: Applied laser = 11500 W, cycle time = 34 s, circular laser spot, diameter of laser spot = 3.3 mm and applied density of energy = 45715,03 J/mm². The axis of the laser beam was misaligned with respect to the axis of the powder nozzle about 400 microns. A suitable first coating layer made of AISI 430L has been obtained. Its thickness is 100 µm ±40 µm. The laser cladding process to deposit the second coating layer has been applied with the following process parameters: power =11500 W, cycle time = 34 s, circular laser spot, diameter of laser spot = 3.3 mm and applied density of energy = 45715.03 J/mm². A suitable second coating layer made of AISI 430L+TiCFeCr has been obtained, having thickness of 180 ±40 µm. Figure 12 shows a cross-sectional view of the substrate and the applied two coating layers. Again, both layers are well integrated (the first one with the substrate, the second one with the first one) and the presence of undesired holes or bubbles is relatively scarce.

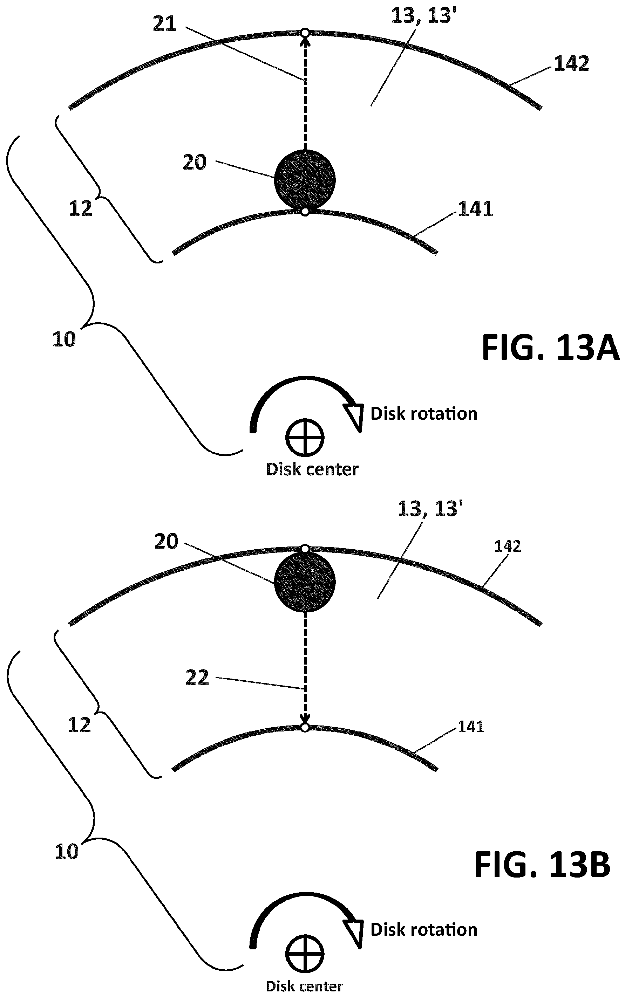

Prior to applying the laser cladding deposition process to deposit one or more coating layers on the substrate of the brake disk, a laser cleaning treatment can be applied to the surface of the substrate 12. An exemplary laser cleaning treatment is shown in Figures 13A and 13B. To apply laser cleaning radiation on the surface 13, 13', a laser beam head performs a radial movement along the radius of the substrate while the substate rotates in a similar way as described with reference to Figures 2A and 2B. In this case, however, there is no deposit of powder on the surface of the substrate. In other words, a laser cleaning process can be applied to the original, non-treated surface of the substrate. The surface 13, 13' is cleaned by applying this laser treatment. Laser radiation is emitted from a laser processing head, not shown, which for example carries a nozzle through which the laser radiation is emitted, in a similar way as described in the laser cladding deposition process (however no powder is delivered in this case).

The surface 13, 13' is radiated with a laser beam providing a power comprised in the range of between about 2 and about 12 kW with a diameter of the laser spot comprised in the range of between about 1.5 and about 4 mm. By adjusting the cycle time, a density of energy on the surface of the substrate comprised in the range of between about 14 kJ/mm² and about 45 kJ/mm² is applied. For example, a laser system providing a power of 8 kW following a "top hat" laser energy distribution, a wavelength of 1064 nm and a laser spot of 2.7 mm can be used. A "top hat" energy distribution provides a substantially constant power along the whole surface of the produced laser spot. The emitted power is a parameter that can be regulated by the user, so that the applied laser power can be fixed, in this example 8 kW, without exceeding the maximum power provided by the laser system. The inventors have found out that a laser having a "top hat" energy distribution performs efficiently because it guarantees a homogeneous power distribution on the whole laser spot. It therefore homogeneously heats the surface on which the laser beam is irradiated. The inventors have observed that such homogeneous power distribution contributes to the efficiency of the cleaning process. Alternatively, a laser having a ring-shaped (donut-type) energy distribution can be used, for example a laser having a certain maximum power on an outer ring (also called outer corona) of the laser spot and a certain different power, lower than the maximum one, on the core of the laser spot.

In the laser cleaning process, the laser beam is moved or scanned defining a certain pattern on the surface 13, 13' to be exposed to the laser radiation. For example, the laser beam can be repetitively scanned following a scanning pattern, thereby creating an effective spot which is displaced in relation to the surface being treated. Alternatively, the laser beam can be moved (scanned) defining a certain trajectory. For example, in Figures 13A and 13B the laser beam is scanned defining a linear trajectory along a radial axis of the surface 13, 13' under laser treatment. The laser system emitting the laser beam is conventional and is out of the present invention. The laser cleaning process can use the same laser system as the laser system used in the laser cladding deposition process, or a different one.

Lamellar graphite is thus removed from the surface 13, 13' of the substrate 12 prior to applying a coating layer thereon. In particular, lamellar graphite is reduced on the surface of the substrate and within a maximum depth of about 80 µm. Under these conditions, a typical substrate of a brake disk having inner diameter of between about 160 and about 230 mm and an outer diameter of between about 270 and about 410 mm requires a cleaning treatment for removing graphite having a duration comprised in the range of about 20 seconds and about 55 seconds. It has been observed that this cleaning treatment enables the evaporation of between 50 and 100% of the graphite lamellae present in the surface, in particular within a thickness of 30 µm from the surface.

Although not shown, like in the laser cladding deposition process, during operation of the laser system to apply a laser beam onto the surface of the substrate to remove graphite therefrom, a shielding gas can be emitted onto the surface 13, 13' of the substrate 12. Same or similar shielding gases, as well as application parameters, used in the laser cladding deposition process can be used in the laser cleaning process. The application of a shielding gas contributes to preventing the oxidation of the surface being treated after the cleaning treatment and contributes to the quick homogenization of the surface, in sum improving the cleaning.

Several experiments have been carried out to assess the application of the disclosed laser cleaning stage.

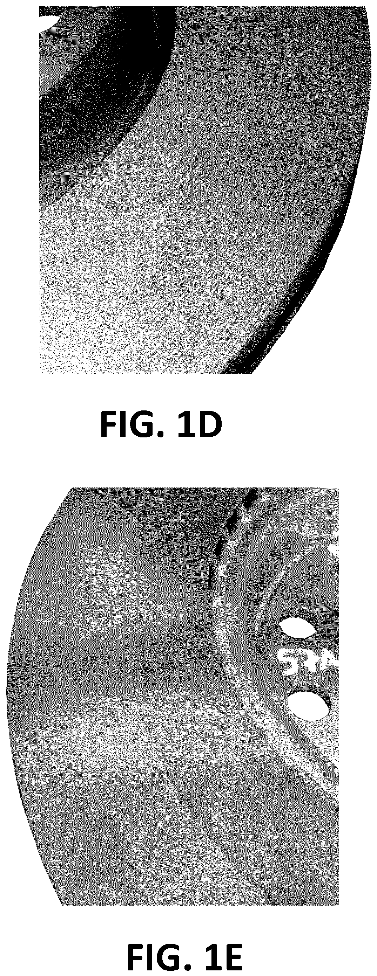

Figures 1B-1C correspond to a seventh experiment. In particular, they show the surfaces 13 and 13' respectively of the brake disk of Figure 1A after applying a laser treatment to remove graphite. The applied laser cleaning treatment had the following operation parameters using a continuous laser: applied laser radiation power of 6 kW (top hat distribution), wavelength of 1064 nm, circular laser spot, diameter of laser spot of 2.7 mm, cycle time = 30 s, linear speed of the laser beam in the range of 100-200 mm/minute (to keep constant the linear rotating velocity of the disk), equivalent linear speed of the rotating substrate of 170 m/minute, applied density of energy = 31438 J/mm² and use of Nitrogen (N₂) as shielding gas. If the treated surfaces 13, 13' of respective Figures 1B and 1C are compared with the non-treated surface 13' (substrate before laser cleaning treatment) of Figure 1A, it can macroscopically be observed that, after the laser cleaning process, the appearance of the surface 13, 13' is matt, while the appearance of the surface of the substrate without any treatment is much brighter. The surface of the break disk has been affected by the laser treatment in the sense that the laser cleaning stage causes a significant reduction of superficial graphite, which is evaporated. As a consequence of the evaporation (removal) of graphite of the surface of the substrate, a better contact surface is achieved for the subsequent bonding between the treated substrate (with reduced amount of graphite) and a metal-based coating layer to be applied on the treated substrate of the break disk. Figures 1D and 1E show detailed photographs of the brake disk of Figure 1A after applying the laser-based cleaning treatment.

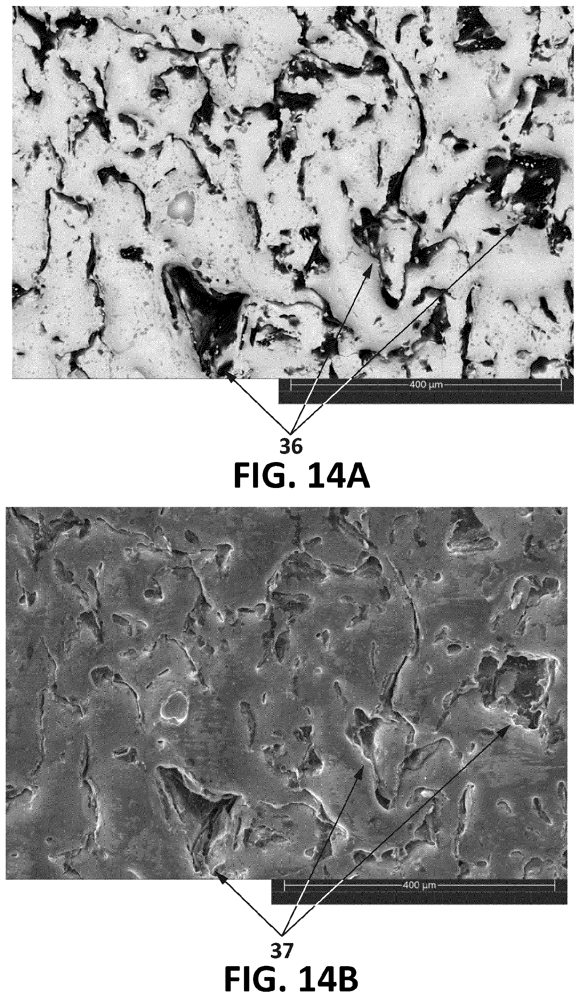

Figures 14A and 14B show SEM (Scanning Electron Microscopy) images (magnification x500) of the surface 13' of the substrate 12 of Figure 1C after being treated with the laser cleaning process of this disclosure. The images have been taken with different adjustments of a SEM device. In both images the empty spaces left after graphite lamellae have been pulled out (evaporated) can be clearly appreciated. Figure 14A has been taken with a configuration of a SEM device which highlights different materials. In particular, the lighter portions of the image represent the substrate (cast iron), while darker portions of the image represent traces of graphite 36 on the surface. Figure 14B has been taken with a configuration of a SEM device which permits to identify the surface relief (certain depth is appreciated). In particular, the shown empty spaces 37 on the surface are caused by the missing graphite lamellae from the surface. This means that the substrate surface, which should be substantially flat, now presents a certain depth (holes) left by the graphite evaporation. These holes cause an increase of the contact surface of the substrate intended to receive the deposited material in the subsequent laser stage (laser cladding deposition process).

Still referring to the seventh experiment (Figures 1A-1C and 14A-B), Figures 15A and 15B show microscope images of a cross section of the substrate of the disk after being treated with the disclosed laser cleaning process. Images 15A and 15B differ in the image resolution, which is lowest in Figure 15A and larger in Figure 15B. The lower portion of each image (the light grey portion thereof) represents the substrate 12, in which graphite lamellae 51 are present (in dark grey colour). It is noted that it is desirable not to alter the structure of the substrate (except in its most superficial portion, where it is desirable to evaporate graphite) and therefore to maintain the graphite inherently present in the substrate. The elongated shape of the graphite can be appreciated, forming branches. In Figures 15A and 15B holes 52 can be observed, in particular on the surface of the substrate, corresponding to graphite lamellae which have been evaporated during the laser cleaning process. This holes 52 will enable the deposition and integration with the substrate of the metal-based coating layer to be subsequently deposited. Figure 15C shows a microscope image of a cross section of the same substrate 12 in which, after the laser cleaning treatment, a metal-based coating layer has been deposited following the already disclosed deposition process. The image resolution of Figure 15C is twice the resolution of Figure 15B. It can be observed that the holes 52 left on the surface and proximity thereof, left by the elimination of graphite, have been filled 53 with the coating layer 81. Thanks to the increase of the contact surface of the substrate caused by the typically branched holes left open by the evaporation of graphite lamellae, there is a corresponding increase in the amount of deposited material which fills the holes and takes root, increasing the adherence between the coating layer and the substrate. The minimally affected thickness of the substrate surface below the deposited coating layer is estimated to be about 40 µm in Figure 15C. In other words, a homogeneous heat affected zone (HAZ) is guaranteed to not exceed a thickness of about 40 µm.

The positive effect of the application of a shielding gas in the laser cleaning stage can be observed in an eighth experiment shown in Figures 1D and 1E. They show a brake disk like the one shown in Figures 1A-1C, to which a cleaning process has been applied as follows: applied laser power = 2000 W, cycle time = 30 s, circular laser spot, diameter of laser spot = 1.55 mm and applied density of energy = 31797.87 J/mm². The disk of Figure 1E has not been treated with shielding gas. In contrast, the disk of Figure 1D has been applied with N₂. As can be observed, the shielding gas prevents oxidation of the surface of the substrate.

A ninth experiment has been made with the disk of Figure 16A. Figure 16A shows a photograph of a brake disk made of grey cast iron, inner diameter of the disk of 220 mm and outer diameter of the disk of 350 mm, prior to the application of any laser cleaning or laser cladding deposition process. Figures 16B and 16C show SEM images (magnification x30 and x100, respectively) of the non-treated surface of the substrate (surface 13' of the disk shown in Figure 16A). It has clear machining marks, which is evidence that no laser cleaning process has been applied. To remove graphite from the surface of the disk, the following laser treatment has been applied using a continuous laser: applied laser power = 5000 W, cycle time = 30 s, linear rotating velocity of disk = 170 m/min, circular laser spot, wavelength = 1064 nm, diameter of laser spot = 3.3 mm and applied density of energy = 17535.73 J/mm². The surfaces 13 and 13' of the brake disk after applying a laser treatment to remove graphite are shown in Figures 16D and 16E. Figures 16F and 16G show SEM image (magnification x30 and x100, respectively) of the surface of the substrate after the exemplified laser cleaning process. In Figure 16G many holes left open by evaporated graphite lamellae can be observed (empty spaces 37). Some machining marks 35 are also observed. In the non-treated surface of Figure 16B machining marks 35 are very clearly appreciated, which proves that the disk has not been exposed to any laser treatment. In this case, there is graphite (i.e. graphite lamellae) on the surface and/or close to the surface of the substrate. In Figure 16F machining marks 35 are much less clearly appreciated, which is an indication that the disk has been exposed to a laser treatment. In this case, after the laser treatment, in which some of the graphite lamellae have been detached or evaporated from the substrate, there are empty spaces caused by the missing graphite lamellae. The inventors have observed that these empty spaces (void areas or void zones) on the surface of the substrate or in the proximity of the surface of the substrate increase the effective surface on which a coating layer can be deposited, thus contributing to the adhesion of the subsequent coating layer to be deposited. In other words, a metal-based coating will fill the empty spaces left by the missing graphite.

A tenth and eleventh experiments have been made with a brake disk like the one shown in Figure 16A.

In the tenth experiment, the following laser treatment has been applied using a continuous laser: applied laser power = 3000 W, cycle time = 30 s, linear rotating velocity of disk = 170 m/min, circular laser spot, wavelength = 1064 nm, diameter of laser spot = 3.3 mm and applied density of energy = 10500 J/mm². Figure 16H shows a SEM image (magnification x100) of one of the treated surfaces of the disk. In this figure only a few holes left open by evaporated graphite lamellae can be observed (empty spaces 37). Machining marks 35 are clearly seen.

In the eleventh experiment, the following laser treatment has been applied using a continuous laser: applied laser power = 7000 W, cycle time = 30 s, linear rotating velocity of disk = 170 m/min, circular laser spot, wavelength = 1064 nm, diameter of laser spot = 3.3 mm and applied density of energy = 24552.83 J/mm². Figure 16I shows a SEM image (magnification x100) of one of the treated surfaces of the disk. In this figure many holes left open by evaporated graphite lamellae can be observed (empty spaces 37). Besides, machining marks 35 are barely observed.

If the SEM images of Figures 16H, 16G and 16I are compared, an optimal performance of the laser cleaning stage of Figure 16I (applied power of 7 kW) is appreciated, in which many holes left open by evaporated graphite lamellae can be observed. Besides, machining marks are barely observed. In contrast, the laser cleaning stage of Figure 16H (applied power of 3 kW) performs poorly and only a few holes left open by evaporated graphite lamellae can be observed. Machining marks are clearly seen.

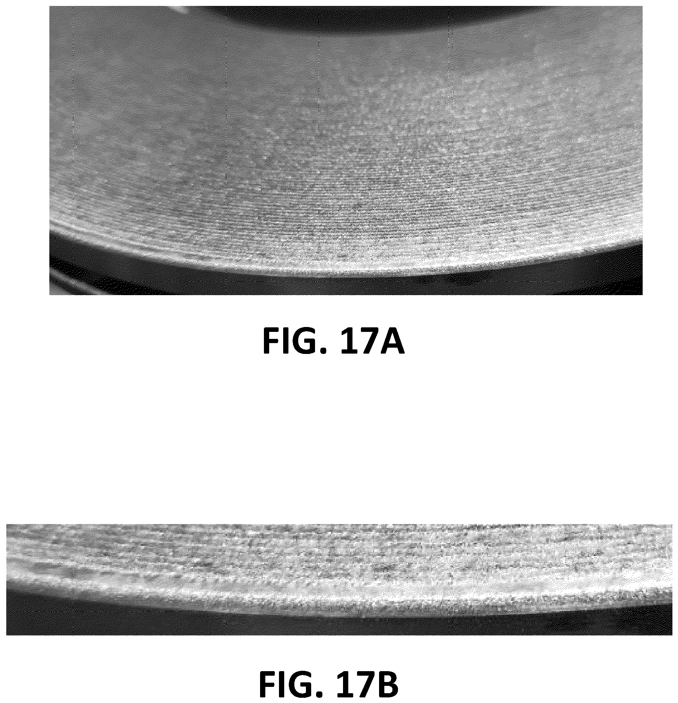

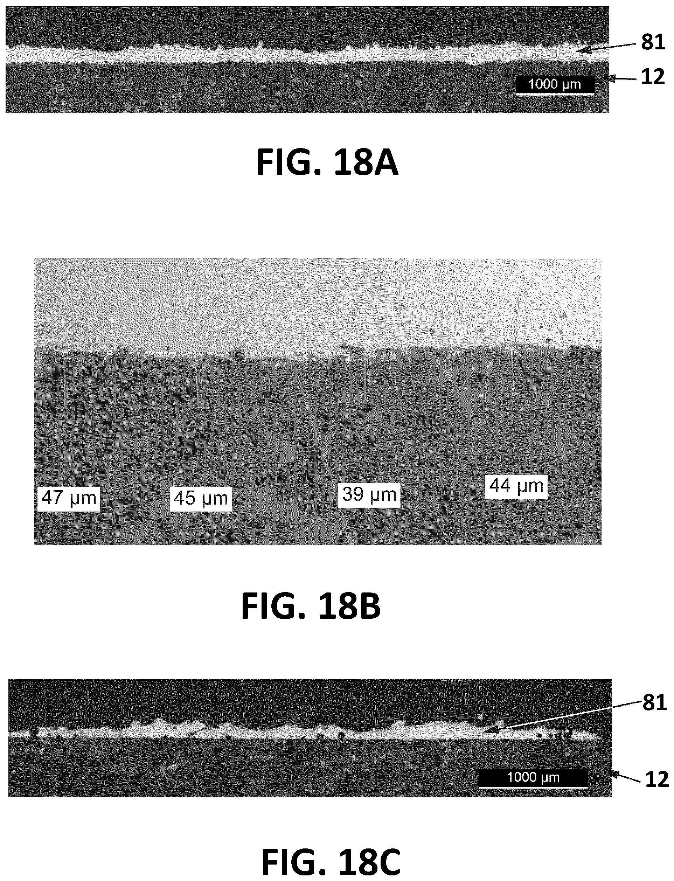

Additional experiments have been carried out to compare the performance of brake disks having a coating layer but no laser cleaning stage has been applied on the surface before the deposition stage (first experiment, Figure 6A), with same brake disks having a same coating layer, but a laser cleaning stage has been applied on the surface before the deposition of the coating layer. In a 12^{th} experiment, a brake disk like the one shown in Figure 1A (brake disk made of grey cast iron, inner diameter of the disk of 177 mm, outer diameter of the disk of 306 mm) has been treated with a laser cleaning process according to the seventh experiment (operation parameters using a continuous laser: applied laser radiation power of 6 kW (top hat distribution), wavelength of 1064 nm, circular laser spot, diameter of laser spot of 2.7 mm, cycle time = 30 s, linear speed of the laser beam in the range of 100-200 mm/minute, equivalent linear speed of the rotating substrate of 170 m/minute, applied density of energy = 31438 J/mm² and use of Nitrogen (N₂) as shielding gas). Afterwards, a coating layer has been applied following the laser cladding deposition process of the first experiment (laser type= top hat; circular laser beam; diameter of laser beam = 2.7 mm; power = 7.6 kW; velocity = 150 m/min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs). The axis of the powder cone was decentered with respect to the axis of the laser beam about 400 µm. A microscope image of the of brake disk (substrate 12) after applying the coating layer 81 is shown in Figure 18A. Figure 17A shows a photograph of the surface of the brake disk of Figure 1B after the deposition of the first coating layer. Figure 17B shows a zoomed portion of the photograph of Figure 17A. The substantially flat coating layer can be macroscopically appreciated. The flatness and defects free (no holes and cracks are found) of the coating layer proves its quality and correct integration with the substrate. A suitable first coating layer made of AISI 316L has been obtained. Its thickness is 100 µm ±40 µm. Figures 18A and 18B show microscope images of the brake disk after applying the described coating layer. Figure 18B shows a detail of Figure 18A. It can be observed that the coating layer 81 is free of holes or bubbles and the coating layer 81 is well integrated with the substrate 12. This good performance is achieved thanks to the combination of the precleaning process and the misalignment of powder spot and laser spot during the powder deposition process. Holes left by the evaporation of graphite in the laser cleaning pretreatment enhance the contact surface and are filled with metal-based material during the deposition process. The heating applied to the surface immediately before receiving the molten powder during the deposition process also contributes to prevent the appearance of additional holes or bubbles caused by the explosion of additional graphite. In Figure 18B the interface between the coating layer 81 and the substrate 12 of Figure 18A is shown enlarged. It can be observed that the area of the substrate thermically affected by the laser processes has a maximum thickness of 47 µm (worst case). The resulting brake disk thus has improved resistance to wear and friction coefficient.

The result of the 12^{th} experiment can also be compared with an experiment made with a brake disk of same characteristics (material and dimensions), same laser cleaning process (applied laser radiation power of 6 kW (top hat distribution), wavelength of 1064 nm, circular laser spot, diameter of laser spot of 2.7 mm, cycle time = 30 s, linear speed of the laser beam in the range of 100-200 mm/minute, equivalent linear speed of the rotating substrate of 170 m/minute, applied density of energy = 31438 J/mm² and use of Nitrogen (N₂) as shielding gas) and same laser deposition process (laser type = top hat; circular laser beam; diameter of laser spot = 2.7 mm; power = 7.6 kW; velocity = 150 m /min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs) but in which in the laser cladding deposition process the axis of the powder spot was aligned with respect to the axis of the laser beam and laser spot. The result is shown in Figure 18C. Figure 18C shows a relatively good performance, although not so good as that of Figure 18A. The precleaning process enables a substantial reduction of holes or bubbles in the coating layer 81 with respect to a sample with no precleaning process (Figure 6B). It also reduces the probability of evaporating graphite during the deposition process of the metal-based coating layer. However, in Figure 18C it can be observed that the application of powder deposition on the surface without a laser preheating immediately before (no misalignment of axes) causes an undesired displacement of the deposited material on the surface of the substrate due to the stress suffered by the material just deposited on the substrate, hindering the integration and adherence of the material with the substrate and provokes the explosion of graphite (abrupt evaporation) still present in the substrate, causing some holes in the coating layer and poor contact between the coating layer and the substrate. The samples of Figures 18A and 18C perform better than the sample of Figure 6B. Figure 18A shows the best performance.

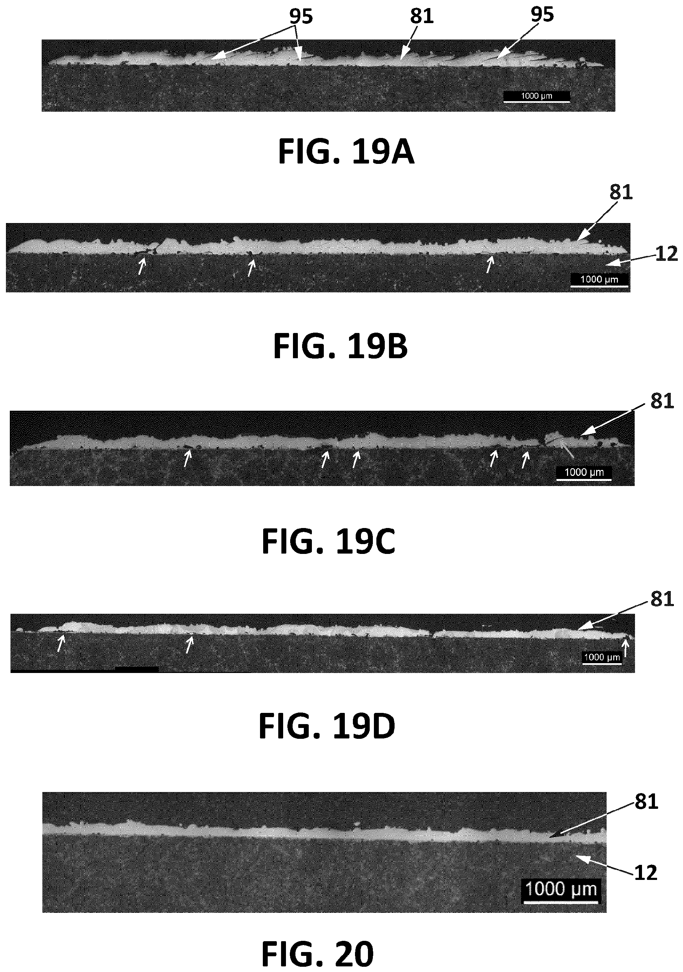

Figures 19A to 19D show more images of the sample of Figure 18C (brake disk to which a laser cleaning treatment has been applied and then a laser cladding process has been applied to deposit a coating layer, but without misalignment between the axis of the powder spot and the axis of the laser beam and laser spot). Due to the applied cleaning process prior to the laser deposition process, substantially no holes are observed in the coating layer 81, due to which good performance of the coated brake disk is to be expected. However, in Figure 19A certain alterations in the coating layer 81 are observed, showing that the material is not well integrated with itself in certain areas 95. In Figures 19B to 19D certain defects in the interface between the coating layer 81 and the substrate 12 are observed, showing that the material applied to coat the substrate cannot integrate well with the substrate, thus causing poor contact between the coating layer and the substrate. These defects are due to the stress caused to the material during the deposition process in which no misalignment of axis has been made.

A 13^{th} experiment has been made with a brake disk like the one in Figure 16A. This experiment can be compared with the second experiment (Figure 8). Prior to depositing a coating layer applying the same laser cladding process of the second experiment (laser type = top hat; circular laser beam; diameter of laser spot = 3.3 mm; power = 8.25 kW; velocity = 120 m/min; cycle time = 30 s; applied density of energy: 28,937.26 J/mm²; diameter of powder spot = 2.8 mm; flow rate of powder = 105 g/min; type of gas: N₂; carrier gas flow = 11 I/min; shielding gas: N₂; shielding gas flow = 8 I/min; type of powder: AISI 316L (stainless steel) (diameter of particles varying in the range of 20-53 µm)) for obtaining a coating layer made of AISI 316L having thickness of 100 µm ±40 µm, a laser cleaning treatment has been previously applied to the original brake disk (laser type: top hat; circular laser beam; diameter of laser beam = 3.3 mm; power = 5 kW; velocity = 170 m/min; cycle time = 30 s; type of gas: N₂; shielding gas flow = 15 I/min; density of energy of the applied laser beam = 17,537.73 J/mm²). The resulting sample is shown in Figure 20, which shows optimal performance. The coating layer 81 is free of holes and is well integrated with the substrate 12. This optimization is achieved thanks to the combination of the precleaning process and the misalignment of powder spot and laser spot during the powder deposition process. The precleaning process causes evaporation of graphite lamellae in the vicinity of the surface of the substrate, leaving holes that can be filled with material being deposited during the laser deposition process. The laser deposition process applied with misalignment of the axes enables the surface to be heated just before molten metal is received thereon, which prevents or at least reduces the appearance of additional holes or bubbles caused by the explosion of additional graphite. The resulting brake disk thus has improved resistance to wear and friction coefficient.

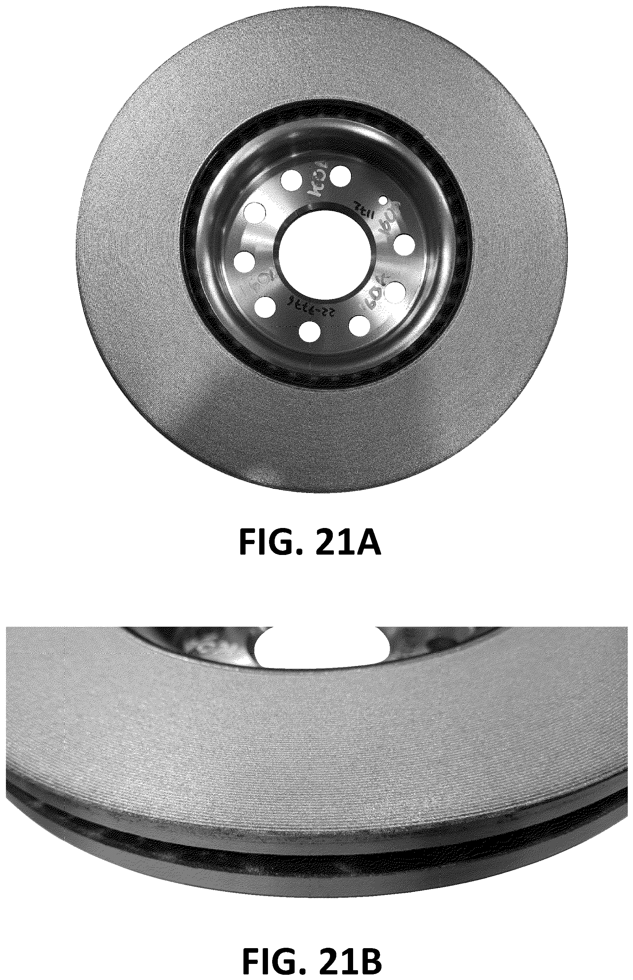

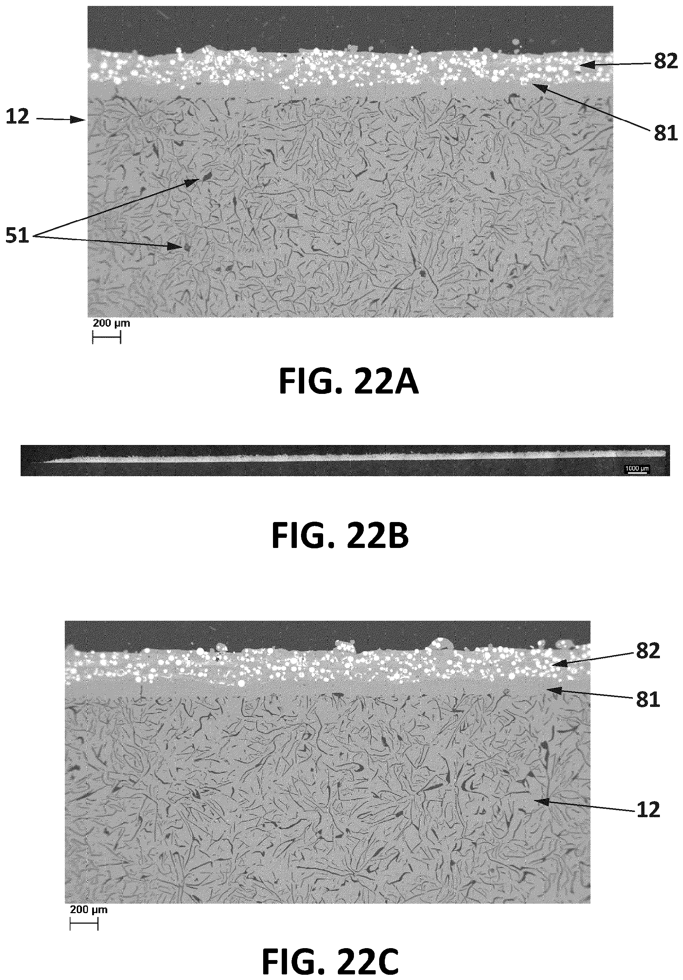

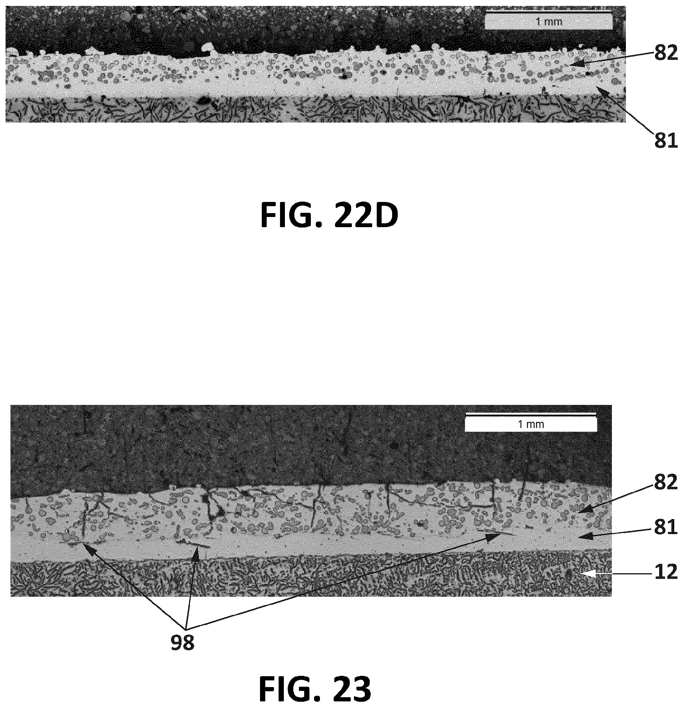

A 14th experiment has been made with a brake disk like the one in Figure 1A. In particular, the 14^{th} experiment was made to a brake disk to which the 12^{th} experiment had been applied (cleaned following a laser cleaning process and coated with a first coating layer, see Figures 17A-B and 18A-B). Next, a second coating layer was applied on the first one following a laser cladding deposition process using the following parameters: laser type = top hat; circular laser beam; diameter of laser beam = 2.7 mm; power = 7.75 kW; velocity = 80 m /min; type of gas: N₂; carrier gas flow = 15 I/min; shielding gas flow = 20 I/min; diameter of powder spot = 2.2 mm; flow rate of powder = 90 g/min; cycle time = 40 s; applied density of energy: 54,143,25J/mm²; type of powder is a mix of: AISI 316L and tungsten carbides WC (20-53 µm); powder supplier: Höganäs for AISI 316L and C&M for WC. The axis of the laser beam was misaligned with respect to the axis of the powder nozzle about 400 microns. A suitable second coating layer made of a mix of AISI 316L and WC has been obtained. Its thickness is of 180 µm ±20 µm. Figure 21A shows a photograph of the brake disk of Figure 17A after the application of the second coating layer. Figure 21B shows a zoomed portion of the photograph of Figure 21A. The substantially flat coating layer can be macroscopically appreciated. The flatness and defects free (no holes and cracks are found) of the coating layer proves its quality and correct integration with the first coating layer. Figures 22A and 22C show SEM images of two exemplary cross sections of the substrate of the disk of Figure 21A (to which a laser cleaning process and two coating layers have been applied). Figures 22B and 22D show images taken with an optical microscope of the same substrate of the disk of Figure 21A. The resolution of Figures 22A and 22C is five times smaller than the resolution of Figures 22B and 22D. In Figures 22A and 22C the substrate 12 occupies most of the image. In the substrate 12, graphite lamellae 51 are present (in dark grey colour). This means that the structure of the substrate has been correctly preserved after the cleaning and cladding processes. It is also observed that the first coating layer 81 is substantially free of graphite. This is because the applied laser cleaning process firstly applied, as well as the additional laser heating applied just before applying the metal-based powder by misaligning the powder cone axis with respect to the axis of the laser beam during the first laser cladding process, have managed to reduce the amount of graphite from the surface of the substrate. In the second coating layer 82, the white spots represent the carbide present in this layer. In the first and second coating layers 81, 82 the grey colour represents the metal base of the layer. It can be observed that both layers are substantially free of graphite.

A 15th experiment has been made to compare the results of the 14th experiment (second coating layer applied using misaligned axes) with the application of a second coating layer on a similar brake disk (after applying the laser cleaning treatment and first coating layer of the 12th experiment, Figures 17A-B and 18A-B), but in this case without misalignment between the axis of the powder spot and the axis of the laser beam and laser spot. Like in the 14th experiment, the laser cladding process to deposit the second coating layer has been applied with the following process parameters: laser type: top hat; circular laser beam; diameter of laser beam = 2.7 mm; power = 7.75 kW; velocity = 80 m/min; type of gas: N₂; carrier gas flow = 15 I/min; shielding gas flow = 20 I/min; diameter of powder spot = 2.2 mm; flow rate of powder = 90 g/min; cycle time = 40 s; applied density of energy: 54,143,25J/mm²; type of powder is a mix of: AISI 316L and tungsten carbides WC (20-53 µm); powder supplier: Höganäs for AISI 316L and C&M for WC. In this case the axis of the laser beam was not misaligned with respect to the axis of the powder nozzle. A second coating layer made of a mix of AISI 316L and WC has been obtained. Figure 23 shows an image of the sample of Figures 17A-17B to which this second coating layer 82 has been applied. Certain detects 98 in the interface between the two layers 81, 82 are observed, showing that the material of the second coating layer 82 cannot integrate well with the first coating layer 81. These defects are due to the stress caused to the material during the deposition process.

In this text, the term "comprises" and "includes" and their derivations (such as "comprising", "including", etc.) should not be understood in an excluding sense, that is, these terms should not be interpreted as excluding the possibility that what is described and defined may include further elements, steps, etc.

The term "about" when used in the context of the present invention preceding a number and referring to it, is to be understood as designating any value lying within the range defined by the number ±5 %, more preferably a range defined by the number ±2 %. For example, the expression "about 10" should be construed as "within the range of 9.5 to 10.5", preferably "within the range of 9.8 to 10.2".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for manufacturing a brake disk, comprising:
providing a substrate (12) of a brake disk, the substrate (12) being made of a graphite-containing metallic material, the substrate (12) defining a surface (13, 13');
depositing a metal-based coating layer onto the surface (13, 13') of the substrate (12) by applying a laser cladding deposition process in which powder is deposited onto the surface (13, 13') while a laser beam is radiated onto the surface (13, 13'), wherein the powder is delivered from a powder nozzle coupled to the laser head from which the laser beam is radiated, so that the powder being delivered and the laser beam move jointly over the surface to be coated as the laser head moves,
**characterized in that** the diameter of a laser spot applied on the surface by the laser beam is greater than the diameter of a powder spot deposited on the surface from the powder nozzle, and the axis of the laser spot applied on the surface is misaligned with respect to the axis of the powder spot delivered to the surface.

2. The method of claim 1, wherein the substrate is made of grey cast iron.

3. The method of any one of claims 1-2, wherein prior to applying a laser cladding deposition process to deposit a metal-based coating layer onto the surface (13, 13') of the substrate (12), graphite is removed from the surface (13, 13') of the substrate (12) by applying a cleaning stage in which the surface is radiated with a laser beam.

4. The method of any one of claims 1-3, wherein during the application of the cleaning stage and/or during the deposition of a metal-based coating layer, the substrate (12) of the brake disk rotates while a laser head from which the laser beam is emitted moves linearly on the surface (13) of the substrate (12), said linear movement following a radial trajectory on the surface of the substrate.

5. The method of claim 4, wherein the brake disk rotates at a linear velocity comprised in the range of 80 and 240 m/minute, more preferably in the range of 120 and 200 m/minute.

6. - The method of any one of claims 1-5, wherein the axis of the powder spot is misaligned with respect to the axis of the laser spot in an amount between 0 and 20% of the diameter of the laser spot, preferably between 2.5 and 20% thereof, more preferably between 2.5 and 15% thereof, still more preferably between 5 and 12.5 thereof.

7. - The method of any one of claims 1-6, wherein in the laser cladding deposition process for depositing a metal-based coating layer onto the surface of the substrate the diameter of the laser spot is between 10 and 40% larger than the diameter of the powder spot.

8. - The method of any one of claims 1-7, wherein in the laser cladding deposition process for depositing a metal-based coating layer, the power of the laser beam is in a range between 6 kW and 16 kW, preferably between 7 kW and 12 kW, and more preferably between 7.5 and 10kW; and the cycle time is preferably selected to be between 20 and 55 seconds.

9. - The method of any one of claims 1-8, wherein the diameter of the laser spot used in the laser cladding process is in a range between 1.5 and 4 mm, preferably between 2 and 4 mm, more preferably between 2.2 and 3.7 mm, and still more preferably between 2.5 and 3.5 mm; and the diameter of the powder spot is in a range between 1 and 3.5 mm, preferably between 1 and 2.5 mm, and more preferably between 1 and 2 mm.

10. - The method of any one of claims 1-9, wherein in the laser cladding deposition process for depositing a metal-based coating layer, a density of energy on the surface of the substrate in the range of between 14 kJ/mm² and 50 kJ/mm² is applied.

11. - The method of claim 3 and of any one of claims 4-10, wherein during the application of the cleaning stage, the surface is radiated with a laser beam emitting with a power comprised in the range of between 2 and 12 kW with a diameter of the laser spot comprised in the range of between 1.5 and 4 mm.

12. The method of claim 11, wherein in the cleaning stage the surface is radiated with a laser beam emitting with a power comprised in the range of between 4 and 8 kW, more preferably between 5 and 7 kW.

13. - The method of any one of claims 11-12, wherein in the cleaning stage the diameter of the laser spot used to remove graphite is in a range between 2 and 4 mm, preferably between 2.2 and 3.7 mm and more preferably between 2.5 and 3.5 mm.

14. - The method of any one of claims 11-13, wherein in the cleaning stage the laser beam provides a density of energy on the surface of the substrate in the range of between 10 and 45 kJ/mm².

15. - The method of any one of claims 1-14, wherein during the application of the cleaning stage and/or during the deposition of a metal-based coating layer, a shielding gas is emitted onto the surface of the substrate while the surface is radiated with the laser beam, wherein the shielding gas is Nitrogen or Argon.

16. - The method of any one of claims 1-15, wherein in the laser cladding deposition process one single layer is deposited, the one single layer being preferably made of a mix of a metal and a carbide, wherein the metal is preferably steel and the carbide is preferably tungsten carbide or titanium carbide.

17. - The method of any one of claims 1-16, further comprising applying a second laser cladding deposition process to deposit a second metal-based coating layer onto the first metal-based coating layer.

18. - The method of claim 17, wherein in the laser cladding deposition process for depositing a second metal-based coating layer, the power of the laser beam is in a range between 7 and 18 kW, preferably between 7.5 and 14 kW, and more preferably between 7.5 and 12kW; and the cycle time is preferably selected to be between 20 and 55 seconds.

19. - The method of either claim 17 or 18, wherein in the second laser cladding deposition process for depositing the second metal-based coating layer, a density of energy on the surface of the substrate in the range of between 25 and 70 kJ/mm² is applied.

20. - The method of any one of claims 17-19, wherein in the first laser cladding deposition process a layer made of metal, preferably steel, is applied; and in the second laser cladding deposition process a layer made of a mix of a metal and a carbide, wherein the metal is preferably steel and the carbide is preferably tungsten carbide or titanium carbide, is applied.

## Patentansprüche

1. Verfahren zur Herstellung einer Bremsscheibe, umfassend:
Bereitstellen eines Substrats (12) einer Bremsscheibe, wobei das Substrat (12) aus einem graphithaltigen metallischen Material besteht und das Substrat (12) eine Oberfläche (13, 13') definiert;
Aufbringen einer Beschichtungsschicht auf Metallbasis auf die Oberfläche (13, 13') des Substrats (12) durch Anwendung eines Laserauftragschweißverfahrens, bei dem Pulver auf die Oberfläche (13, 13') aufgebracht wird, während ein Laserstrahl auf die Oberfläche (13, 13') gerichtet wird, wobei das Pulver aus einer Pulverdüse zugeführt wird, die mit dem Laserkopf verbunden ist, von dem aus der Laserstrahl ausgestrahlt wird, so dass sich das zugeführte Pulver und der Laserstrahl gemeinsam über die zu beschichtende Oberfläche bewegen, während sich der Laserkopf bewegt,
**dadurch gekennzeichnet, dass**
der Durchmesser eines durch den Laserstrahl auf die Oberfläche aufgebrachten Laserspots größer ist als der Durchmesser eines aus der Pulverdüse auf die Oberfläche aufgebrachten Pulverspots, und die Achse des auf die Oberfläche aufgebrachten Laserspots gegenüber der Achse des auf die Oberfläche zugeführten Pulverspots versetzt ist.

2. Verfahren nach Anspruch 1, wobei das Substrat aus Grauguss besteht.

3. Verfahren nach einem der Ansprüche 1-2, wobei vor der Durchführung eines Laserauftragschweißverfahrens zum Aufbringen einer metallbasierten Beschichtungsschicht auf die Oberfläche (13, 13') des Substrats (12) Graphit von der Oberfläche (13, 13') des Substrats (12) entfernt wird, indem ein Reinigungsschritt durchgeführt wird, bei dem die Oberfläche mit einem Laserstrahl bestrahlt wird.

4. Verfahren nach einem der Ansprüche 1 bis 3, wobei sich das Substrat (12) der Bremsscheibe während der Durchführung des Reinigungsschritts und/oder während des Aufbringens einer metallbasierten Beschichtungsschicht dreht, während sich ein Laserkopf, von dem der Laserstrahl ausgesendet wird, linear auf der Oberfläche (13) des Substrats (12) bewegt, wobei diese lineare Bewegung einer radialen Bahn auf der Oberfläche des Substrats folgt.

5. Verfahren nach Anspruch 4, wobei sich die Bremsscheibe mit einer linearen Geschwindigkeit im Bereich von 80 bis 240 m/min, vorzugsweise im Bereich von 120 bis 200 m/min, dreht.

6. Verfahren nach einem der Ansprüche 1 bis 5, wobei die Achse des Pulverspots gegenüber der Achse des Laserspots um einen Betrag zwischen 0 und 20 % des Durchmessers des Laserspots versetzt ist, vorzugsweise zwischen 2,5 und 20 % davon, noch bevorzugter zwischen 2,5 und 15 % davon, am meisten bevorzugt zwischen 5 und 12,5 % davon.

7. Verfahren nach einem der Ansprüche 1 bis 6, wobei bei dem Laserauftragschweißverfahren zum Aufbringen einer metallbasierten Beschichtungsschicht auf die Oberfläche des Substrats der Durchmesser des Laserspots zwischen 10 und 40 % größer ist als der Durchmesser des Pulverflecks.

8. Verfahren nach einem der Ansprüche 1 bis 7, wobei bei dem Laserauftragschweißverfahren zum Aufbringen einer Beschichtungsschicht auf Metallbasis die Leistung des Laserstrahls in einem Bereich zwischen 6 kW und 16 kW, vorzugsweise zwischen 7 kW und 12 kW und noch bevorzugter zwischen 7,5 und 10 kW liegt; und die Zykluszeit vorzugsweise auf einen Wert zwischen 20 und 55 Sekunden gewählt wird.

9. Verfahren nach einem der Ansprüche 1 bis 8, wobei der Durchmesser des im Laserauftragschweißverfahren verwendeten Laserspots in einem Bereich zwischen 1,5 und 4 mm, vorzugsweise zwischen 2 und 4 mm, noch bevorzugter zwischen 2,2 und 3,7 mm und am meisten bevorzugt zwischen 2,5 und 3,5 mm liegt; und der Durchmesser des Pulverspots in einem Bereich zwischen 1 und 3,5 mm, vorzugsweise zwischen 1 und 2,5 mm und noch bevorzugter zwischen 1 und 2 mm liegt.

10. Verfahren nach einem der Ansprüche 1 bis 9, wobei beim Laserauftragschweißverfahren zum Aufbringen einer Beschichtung auf Metallbasis eine Energiedichte auf der Oberfläche des Substrats im Bereich zwischen 14 kJ/mm² und 50 kJ/mm² aufgebracht wird.

11. Verfahren nach Anspruch 3 und einem der Ansprüche 4 bis 10, wobei während der Durchführung der Reinigungsstufe die Oberfläche mit einem Laserstrahl bestrahlt wird, der eine Leistung im Bereich von 2 bis 12 kW aufweist und dessen Laserspotdurchmesser im Bereich von 1,5 bis 4 mm liegt.

12. Verfahren nach Anspruch 11, wobei in der Reinigungsstufe die Oberfläche mit einem Laserstrahl bestrahlt wird, der eine Leistung im Bereich zwischen 4 und 8 kW, vorzugsweise zwischen 5 und 7 kW, aufweist.

13. Verfahren nach einem der Ansprüche 11 bis 12, wobei in der Reinigungsphase der Durchmesser des zur Entfernung von Graphit verwendeten Laserspots im Bereich zwischen 2 und 4 mm, vorzugsweise zwischen 2,2 und 3,7 mm und noch bevorzugter zwischen 2,5 und 3,5 mm liegt.

14. Verfahren nach einem der Ansprüche 11-13, wobei der Laserstrahl in der Reinigungsstufe eine Energiedichte auf der Oberfläche des Substrats im Bereich zwischen 10 und 45 kJ/mm² liefert.

15. Verfahren nach einem der Ansprüche 1 bis 14, wobei während der Durchführung der Reinigungsstufe und/oder während der Abscheidung einer Beschichtung auf Metallbasis ein Schutzgas auf die Oberfläche des Substrats aufgebracht wird, während die Oberfläche mit dem Laserstrahl bestrahlt wird, wobei das Schutzgas Stickstoff oder Argon ist.

16. Verfahren nach einem der Ansprüche 1 bis 15, wobei im Laserauftragschweißverfahren eine einzelne Schicht aufgebracht wird, wobei die einzelne Schicht vorzugsweise aus einer Mischung aus einem Metall und einem Karbid besteht, wobei das Metall vorzugsweise Stahl und das Karbid vorzugsweise Wolframkarbid oder Titankarbid ist.

17. Verfahren nach einem der Ansprüche 1 bis 16, das ferner das Durchführen eines zweiten Laserauftragschweißverfahrens umfasst, um eine zweite metallbasierte Beschichtungsschicht auf die erste metallbasierte Beschichtungsschicht aufzubringen.

18. Verfahren nach Anspruch 17, wobei bei dem Laserauftragschweißverfahren zum Aufbringen einer zweiten metallbasierten Beschichtungsschicht die Leistung des Laserstrahls in einem Bereich zwischen 7 und 18 kW, vorzugsweise zwischen 7,5 und 14 kW und noch bevorzugter zwischen 7,5 und 12 kW liegt; und die Zykluszeit vorzugsweise auf einen Wert zwischen 20 und 55 Sekunden gewählt wird.

19. Verfahren nach Anspruch 17 oder 18, wobei bei dem zweiten Laserauftragschweißverfahren zum Aufbringen der zweiten metallbasierten Beschichtungsschicht eine Energiedichte auf der Oberfläche des Substrats im Bereich zwischen 25 und 70 kJ/mm² aufgebracht wird.

20. Verfahren nach einem der Ansprüche 17 bis 19, wobei im ersten Laserauftragschweißverfahren eine Schicht aus Metall, vorzugsweise Stahl, aufgebracht wird; und im zweiten Laserauftragschweißverfahren eine Schicht aus einer Mischung aus einem Metall und einem Karbid aufgebracht wird, wobei das Metall vorzugsweise Stahl und das Karbid vorzugsweise Wolframkarbid oder Titankarbid ist.

## Revendications

1. Méthode pour fabriquer un disque de frein, comprenant :
la fourniture d'un substrat (12) d'un disque de frein, le substrat (12) étant fait d'un matériau métallique contenant du graphite, le substrat (12) définissant une surface (13, 13') ;
le dépôt d'une couche de revêtement à base de métal sur la surface (13, 13') du substrat (12) par application d'un procédé de dépôt par rechargement laser dans lequel une poudre est déposée sur la surface (13, 13') tandis qu'un faisceau laser est dirigé sur la surface (13, 13'), laquelle poudre est délivrée depuis une buse à poudre couplée à la tête de laser à partir de laquelle le faisceau est émis, de façon que la poudre qui est en cours de délivrance et le faisceau laser se déplacent conjointement sur la surface devant être revêtue au fur et à mesure du déplacement de la tête de laser,
**caractérisée en ce que** le diamètre d'un point de laser appliqué sur la surface par le faisceau laser est supérieur au diamètre d'un point de poudre déposé sur la surface à partir de la buse à poudre, et l'axe du point de laser appliqué sur la surface est désaligné par rapport à l'axe du point de poudre délivré à la surface.

2. Méthode selon la revendication 1, dans laquelle le substrat est fait de fonte grise.

3. Méthode selon l'une quelconque des revendications 1 et 2, dans laquelle, avant l'application d'un procédé de dépôt par rechargement laser pour déposer une couche de revêtement à base de métal sur la surface (13, 13') du substrat (12), le graphite est retiré de la surface (13, 13') du substrat (12) par application d'une étape de nettoyage dans laquelle la surface est irradiée par un faisceau laser.

4. Méthode selon l'une quelconque des revendications 1 à 3, dans laquelle, pendant l'application de l'étape de nettoyage et/ou pendant le dépôt d'une couche de revêtement à base de métal, le substrat (12) du disque de frein tourne tandis qu'une tête de laser à partir de laquelle le faisceau laser est émis se déplace linéairement sur la surface (13) du substrat (12), ledit mouvement linéaire suivant une trajectoire radiale sur la surface du substrat.

5. Méthode selon la revendication 4, dans laquelle le disque de frein tourne à une vitesse linéaire comprise dans la plage allant de 80 à 240 m/minute, mieux encore dans la plage allant de 120 à 200 m/minute.

6. Méthode selon l'une quelconque des revendications 1 à 5, dans laquelle l'axe du point de poudre est désaligné par rapport à l'axe du point de laser en une quantité comprise entre 0 et 20 % du diamètre du point de laser, de préférence entre 2,5 et 20 % de celui-ci, mieux encore entre 2,5 et 15 % de celui-ci, plus particulièrement entre 5 et 12,5 % de celui-ci.

7. Méthode selon l'une quelconque des revendications 1 à 6, dans laquelle, dans le procédé de dépôt par rechargement laser pour déposer une couche de revêtement à base de métal sur la surface du substrat, le diamètre du point de laser est entre 10 et 40 % plus grand que le diamètre du point de poudre.

8. Méthode selon l'une quelconque des revendications 1 à 7, dans laquelle, dans le procédé de dépôt par rechargement laser pour déposer une couche de revêtement à base de métal sur la surface du substrat, la puissance du faisceau laser est située dans la plage comprise entre 6 kW et 16 kW, de préférence entre 7 kW et 12 kW, et mieux encore entre 7,5 et 10 kW ; et le temps de cycle est de préférence choisi de façon à être compris entre 20 et 55 secondes.

9. Méthode selon l'une quelconque des revendications 1 à 8, dans laquelle le diamètre du point de laser utilisé dans le procédé de dépôt par rechargement laser est situé dans la plage comprise entre 1,5 et 4 mm, de préférence entre 2 et 4 mm, mieux encore entre 2,2 et 3,7 mm, et plus particulièrement entre 2,5 et 3,5 mm ; et le diamètre du point de poudre est situé dans la plage comprise entre 1 et 3,5 mm, de préférence entre 1 et 2,5 mm, et mieux encore entre 1 et 2 mm.

10. Méthode selon l'une quelconque des revendications 1 à 9, dans laquelle, dans le procédé de dépôt par rechargement laser pour déposer une couche de revêtement à base de métal, une densité d'énergie sur la surface du substrat située dans la plage comprise entre 14 kJ/mm² et 50 kJ/mm² est appliquée.

11. Méthode selon la revendication 3 et l'une quelconque des revendications 4 à 10, dans laquelle, pendant l'application de l'étape de nettoyage, la surface est irradiée avec un faisceau laser émettant avec une puissance située dans la plage comprise entre 2 et 12 kW avec un diamètre du point de laser situé dans la plage comprise entre 1,5 et 4 mm.

12. Méthode selon la revendication 11, dans laquelle, dans l'étape de nettoyage, la surface est irradiée avec un faisceau laser émettant avec une puissance située dans la plage comprise entre 4 et 8 kW, mieux encore entre 5 et 7 kW.

13. Méthode selon l'une quelconque des revendications 11 et 12, dans laquelle, dans l'étape de nettoyage, le diamètre du point de laser utilisé pour retirer le graphite est situé dans la plage comprise entre 2 et 4 mm, de préférence entre 2,2 et 3,7 mm et mieux encore entre 2,5 et 3,5 mm.

14. Méthode selon l'une quelconque des revendications 11 à 13, dans laquelle, dans l'étape de nettoyage, le faisceau laser délivre une densité d'énergie sur la surface du substrat située dans la plage comprise entre 10 et 45 kJ/mm².

15. Méthode selon l'une quelconque des revendications 1 à 14, dans laquelle, pendant l'application de l'étape de nettoyage et/ou pendant le dépôt d'une couche de revêtement à base de métal, un gaz protecteur est émis sur la surface du substrat alors que la surface est irradiée avec le faisceau laser, dans laquelle le gaz protecteur est l'azote ou l'argon.

16. Méthode selon l'une quelconque des revendications 1 à 15, dans laquelle, dans le procédé de dépôt par rechargement laser, une seule couche est déposée, la couche unique étant de préférence faite d'un mélange d'un métal et d'un carbure, dans laquelle le métal est de préférence un acier et le carbure est de préférence le carbure de tungstène ou le carbure de titane.

17. Méthode selon l'une quelconque des revendications 1 à 16, comprenant en outre l'application d'un deuxième procédé de dépôt par rechargement laser pour déposer une deuxième couche de revêtement à base de métal sur la première couche de revêtement à base de métal.

18. Méthode selon la revendication 17, dans laquelle, dans le procédé de dépôt par rechargement laser pour déposer une deuxième couche de revêtement à base de métal, la puissance du faisceau laser est située dans la plage comprise entre 7 et 18 kW, de préférence entre 7,5 et 14 kW, et mieux encore entre 7,5 et 12 kW ; et le temps de cycle est de préférence choisi de façon à être compris entre 20 et 55 secondes.

19. Méthode selon l'une ou l'autre des revendications 17 et 18, dans laquelle, dans le deuxième procédé de dépôt par rechargement laser pour déposer la deuxième couche de revêtement à base de métal, une densité d'énergie sur la surface du substrat située dans la plage comprise entre 25 et 70 kJ/mm² est appliquée.

20. Méthode selon l'une quelconque des revendications 17 à 19, dans laquelle, dans le premier procédé de dépôt par rechargement laser, une couche faite de métal, de préférence d'acier, est appliquée ; et dans le deuxième procédé de dépôt par rechargement laser, une couche faite d'un mélange d'un métal et d'un carbure, dans laquelle le métal est de préférence un acier et le carbure est de préférence le carbure de tungstène ou le carbure de titane, est appliquée.
